(19) **Europäisches Patentamt**

**European Patent Office**

**Office européen des brevets**

(11) **EP 1 516 753 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.$^7$: **B60C 23/04**

(21) Anmeldenummer: **04028483.8**

(22) Anmeldetag: **25.03.2003**

(54) **Reifendrucküberwachungssystem**

Tire pressure monitoring system

Système de surveillance de la pression des pneumatiques

(84) Benannte Vertragsstaaten:
**DE**

(30) Priorität: **25.03.2002 DE 10213266**

(43) Veröffentlichungstag der Anmeldung:
**23.03.2005 Patentblatt 2005/12**

(62) Dokumentnummer(n) der früheren Anmeldung(en) nach Art. 76 EPÜ:
**03744852.9 / 1 478 526**

(73) Patentinhaber: **Infineon Technologies AG**
**81669 München (DE)**

(72) Erfinder: **Hammerschmidt, Dirk**
**6504 Villach (AT)**

(74) Vertreter: **Schoppe, Fritz et al**
**Patentanwälte**
**Schoppe, Zimmermann, Stöckeler & Zinkler**
**Postfach 246**
**82043 Pullach bei München (DE)**

(56) Entgegenhaltungen:
| | |
|---|---|
| **EP-A- 0 989 001** | **EP-A- 1 092 570** |
| **DE-A- 10 007 558** | **US-A- 5 335 540** |
| **US-A- 5 825 286** | |

**Beschreibung**

Die vorliegende Erfindung bezieht sich auf ein Drucksensorsystem, und insbesondere auf ein System zum Überwachen eines Reifendrucks in einem Fahrzeugreifen.

In der Fahrzeugtechnik werden immer größere Anstrengungen unternommen, um Reifendrucksensorsysteme zu entwickeln, mit denen automatisch der Reifendruck eines Kraftfahrzeuges, z. B. eines LKWs, PKWs oder Motorrads, erfasst werden kann. Mittels solcher Reifendrucksensorsysteme sollen Druckänderungen möglichst frühzeitig an eine Zentraleinheit, z. B. den Bordcomputer des Fahrzeugs, übermittelt werden, um so früh wie möglich Beschädigungen eines Reifens zu erkennen, bzw. den Fahrer ausreichend früh zu warnen, wenn Reifendruckänderungen vorliegen, da diese auf einen Gasverlust oder auf eine anomale Verformung des Reifens hinweisen. Damit kann der Fahrer eines Kraftfahrzeuges häufig noch_ausreichend früh vor dem Platzen eines Fahrzeugreifens aufgrund einer Beschädigung oder auch vor einem sogenannten "schleichenden Platten" gewarnt werden.

Zur Messung und Überwachung der physikalischen Zustandsgrößen wie Druck und Temperatur in der Gasfüllung eines Fahrzeugreifens, beispielsweise gemäß Dokument US 5,825,286, kommen üblicherweise batteriebetriebene Sensoranordnungen zum Einsatz, die aus dem Inneren des Reifens, vorzugsweise an der Felge, ihre Messwerte über eine Sendeeinheit drahtlos per Funk an eine außerhalb des Reifens angebrachte Empfangseinheit übermitteln. Die Empfangseinheit ist dabei beispielsweise mit dem Bordcomputer des Fahrzeugs verbunden. Aufgrund des notwendigen Batteriebetriebs der mit der Sendeeinheit versehenen Sensoranordnung ist die Lebensdauer derartiger Sensoranordnungen zur Reifendrucküberwachung jedoch äußerst begrenzt.

Herkömmliche Sensoranordnungen zum Erfassen und Überwachen des Reifendrucks eines Fahrzeugreifens verwenden üblicherweise drei Hauptschaltungsblöcke. Der erste Schaltungsblock ist dabei ein Einschaltzeitgeber (wake up timer), der ständig in Betrieb ist und die weiteren Schaltungsblöcke der Reifendrucküberwachungseinrichtung, d. h. den Reifendrucksensor und die Sendeeinheit, unter definierten Bedingungen aktiviert. Der Reifendrucksensor stellt den zweiten Hauptschaltungsblock dar und ist dafür verantwortlich, den Reifendruck zu erfassen und in einen digitalen Messwert umzuwandeln, der den erfassten aktuellen Reifendruckmesswert wiedergibt. Den dritten Hauptschaltungsblock stellt die Sendeeinheit (Transmitter) der Reifendrucksensoranordnung dar, wobei die Sendeeinheit den jeweils erfassten Druckwert über eine Hochfrequenzfunkstrecke an die dem Bordcomputer zugeordnete Empfangseinheit überträgt.

Die bisher im Stand der Technik eingesetzten Reifendrucksensoranordnungen verwenden zusätzlich einen Beschleunigungssensor, um den jeweiligen Fahrzustand des Fahrzeugs zu ermitteln. Aufgrund der Werte des Beschleunigungssensors kann beispielsweise bei Stillstand des Fahrzeugs die Messrate, mit der die Reifendruckmesswerte erfasst werden, und insbesondere die Zahl der stark strom-verbrauchenden HF-Übertragungen im Vergleich zum Fahrbetrieb deutlich reduziert werden, um die Leistungsaufnahme der Sensoranordnung zumindest geringfügig zu reduzieren.

Außerdem existieren im Stand der Technik Ansätze, die einen festen Schwellenwert für die aus den Reifendruckmesswerten erfassten Änderungen des Reifendrucks verwenden, um eine unbedingte Übermittlung des jeweils erfassten Reifendruckmesswertes von der Sendeeinheit der Reifendrucksensoranordnung zu einer externen dazu angeordneten Empfangseinheit zu veranlassen, wobei die Empfangseinheit üblicherweise mit der Fahrzeugelektronik verbunden ist, um beispielsweise über einen Bordcomputer die erfassten Reifendruckmesswerte dem Fahrer zur Verfügung zu stellen.

Die bisher im Stand der Technik eingesetzten Reifendrucksensoranordnungen zum Überwachen des Reifendrucks eines Fahrzeugreifens weisen jedoch eine Reihe von Nachteilen auf. So ist es mit den bisher bekannten batteriebetriebenen Reifendrucksensoranordnungen nicht möglich, über die gesamte Lebensdauer der Reifendrucksensoranordnung, die in der Größenanordnung von beispielsweise zehn Jahren liegt, kontinuierliche Messungen der Reifendruckmesswerte vorzunehmen. Übliche Reifendrucksensoranordnungen weisen dafür einen zu hohen Leistungsverbrauch auf, der die Lebensdauer der batteriebetriebenen Reifendrucksensoranordnung begrenzt, so dass nicht über die gesamte angestrebte Lebensdauer des Sensorsystems eine kontinuierliche Messung der physikalischen Zustandsgrößen wie Druck und Temperatur mit einer ausreichend hohen Messwiederholungsrate erfolgen kann. Eine ausreichende Messwiederholungsrate wird dabei durch den Zeitabstand festgelegt, während dem eine Änderung des Reifendrucks spätestens erkannt werden soll, so dass gilt, je kürzer der Zeitabstand zwischen der Erfassung der einzelnen Reifendruckmesswerte und deren Übermittlung an eine Auswerteelektronik ist, um so höher ist die Sicherheit, ausreichend früh eine gefährliche Änderung des Reifendrucks erkennen zu können.

Der Hauptleistungsverbrauch in einer derartigen Reifendrucksensoranordnung wird vor allem durch die zugeordnete Sendeeinheit bestimmt, die zur Übertragung der einzelnen Reifendruckmesswerte an eine Gegenstelle, d. h. an die der Fahrzeugelektronik zugeordneten Empfangseinheit dient, die die weitere Verarbeitung der übermittelten Reifendruck- bzw. Reifentemperaturwerte übernimmt. Bei den bisher gebräuchlichen Reifendrucksensoranordnungen wird also die Messhäufigkeit zur Erfassung der Reifendruckmesswerte und die Übertragungshäufigkeit zur Übermittlung der Reifendruckmesswerte abhängig von dem über einen zusätzlichen Beschleunigungssensor oder einen zusätzlichen Bewegungsschalter erfassten Fahrzustand des Fahrzeugs vorgenommen.

Bei den im Stand der Technik bekannten Reifendrucksensoranordnungen ist es also erforderlich, um frühestmöglich Druckänderungen des Reifendrucks zu erfassen, die auf Beschädigungen des Reifens hinweisen, abhängig vom erfassten Fahrzustand des Fahrzeugs eine im wesentlichen kontinuierliche Messung der Druck- und Temperaturwerte in dem Reifen vorzunehmen und diese an eine zentrale Verarbeitungseinheit, die der Fahrzeugelektronik zugeordnet ist, über eine Hochfrequenzfunkstrecke zu übertragen. Die relativ hohe Einschalthäufigkeit der Sendeeinheit bei dem Stand der Technik bekannten Reifendrucksensoranordnungen führt daher zu einer relativ hohen, mittleren Leistungsaufnahme der batteriebetriebenen Anordnung, was bekanntermaßen zur Folge hat, dass die angestrebte Lebensdauer von beispielsweise 10 Jahren solcher Reifendrucksensoranordnungen nicht erreicht werden kann.

Ausgehend von diesem Stand der Technik besteht die Aufgabe der vorliegenden Erfindung darin, ein verbessertes Konzept zum Überwachen eines Reifendrucks in einem Reifen eines Fahrzeugs zu schaffen, so dass über die gesamte angestrebte Lebensdauer einer Reifendrucksensoranordnung die physikalischen Zustandsgrößen wie Druck und Temperatur in einem Reifen zuverlässig überwacht werden können.

Diese Aufgabe wird durch ein Verfahren zum Überwachen eines Reifendrucks in einem Reifen eines Fahrzeugs gemäß Anspruch 1, durch ein Computer-Programm gemäß Anspruch 17 und durch eine Vorrichtung zum Überwachen eines Reifendrucks in einem Reifen eines Fahrzeugs gemäß Anspruch 18 gelöst.

Bei dem erfindungsgemäßen Verfahren zum Überwachen eines Reifensdrucks in einem Reifen eines Fahrzeugs werden zeitlich aufeinanderfolgende Reifendruckmesswerte durch eine Druckmesseinrichtung erfasst, wobei von einer Sendeeinheit zumindest ein Teil der Reifendruckmesswerte mit einer veränderlichen Häufigkeit zu einer Empfangseinheit übertragen werden. Die Häufigkeit der Übertragung wird dabei von den erfassten Reifendruckmesswerten abgeleitet oder aus einer Mehrzahl von Reifendruckmesswerten wird eine Reifendruckänderung des Reifens ermittelt, wobei der zeitliche Abstand zwischen aufeinanderfolgenden Erfassungszeitpunkten der Reifendruckmesswerte abhängig von der ermittelten Reifendruckänderung des Reifens eingestellt wird.

Die erfindungsgemäße Vorrichtung zum Überwachen eines Reifendrucks in einem Reifen eines Fahrzeugs umfasst eine Druckmesseinrichtung zum Erfassen zeitlich aufeinanderfolgender Reifendruckmesswerte, eine Sendeeinheit zum Übertragen zumindest eines Teils der Reifendruckmesswerte zu einer Empfangseinheit, und eine Steuereinheit zum Steuern der Häufigkeit der Übertragung der Reifendruckmesswerte durch die Sendeeinheit in Abhängigkeit von den erfassten Reifendruckmesswerten oder zum Ermitteln einer Reifendruckänderung des Reifens aus einer Mehrzahl von vorangehenden Reifendruckmesswerten, um den zeitliche Abstand zwischen aufeinanderfolgenden Erfassungszeitpunkten der Reifendruckmesswerte abhängig von der ermittelten Reifendruckänderung einzustellen.

Der vorliegenden Erfindung liegt dabei die Erkenntnis zugrunde, dass die Häufigkeit, mit der aktuell erfasste Reifendruckmesswerte und optional auch andere ausgewertete Reifendaten durch eine Sendeeinheit an eine externe Empfangseinheit übermittelt werden, veränderlich ist, wobei die Häufigkeit für die Übertragung aus den erfassten Reifendruckmesswerten selbst abgeleitet wird.

Dabei werden nicht alle erfassten Messwerte von der Sendeeinheit zu der Empfangseinheit übertragen, solange sich die erfassten Reifendruckmesswerte in einem Normalbereich befinden, wobei die Häufigkeit für die Übertragung der Reifendruckmesswerte erhöht wird, d. h. relativ kurze zeitliche Abstände für die Übertragung der Reifendruckmesswerte gewählt werden, wenn ein aus den erfassten Reifendruckmesswerten abgeleiteter, reifendruckabhängiger Parameter auf eine erhöhte Reifendruckänderung, bzw. erhöhte Reifendruckänderungen, hinweist. Erhöhte Reifendruckänderungen ergeben sich beispielsweise bei einem Gasverlust in dem Reifen oder bei einer anomalen Verformung bzw. Beschädigung des Reifens, wobei sichergestellt ist, dass in diesem Fall durch die erhöhte Häufigkeit die Übertragung der aktuellen Reifendruckmesswerte Änderungen des Reifendrucks schnellstmöglich erkannt werden und somit eine zuverlässige Überwachung der Funktionstüchtigkeit des Fahrzeugreifens ermöglicht wird.

Bei der vorliegenden Erfindung wird also der Zeitabstand für die Übertragung der Reifendruckmesswerte, d. h. die Häufigkeit der Übertragung von aktuellen Reifendruckmesswerten, an eine Empfangseinheit so aus den erfassten Reifendruckmesswerten abgeleitet, dass einerseits die Feststellung einer Druckänderung in dem Fahrzeugreifen schnellstmöglich erkannt und an die Empfangseinheit übermittelt kann, und andererseits aufgrund der stark verringerten Leistungsaufnahme der Reifendrucksensoranordnung während des Normalbetriebs des Fahrzeugreifens diese über die gesamte angestrebte Lebensdauer, z. B. mehrere Jahre, mit einer Batterie betrieben werden kann.

Bei der vorliegenden Erfindung wird also die Häufigkeit, mit der zeitlich aufeinanderfolgende Reifendruckmesswerte durch eine Sendeeinheit zu einer externen Empfangseinheit übertragen werden, aus den erfassten Reifendruckmesswerten selbst abgeleitet, indem ein reifendruckabhängiger Parameter aus den erfassten Reifendruckmesswerten erzeugt wird, der zur Beurteilung der Veränderung von bestimmten physikalischen Zustandsgrößen des Reifens, wie Reifendruck und Reifentemperatur, herangezogen wird. Der reifendruckabhängige Parameter kann dabei eine aus den Reifendruckmesswerten ermittelte physikalische Größe, wie der Reifendruckverlauf oder die zeitlichen Änderung des Reifendruckverlaufs (Gradient), sein oder der reifendruckabhängige Parameter kann eine statistische Größe sein, die aus den zeitlich aufeinanderfolgenden Reifendruckmesswerten bestimmt wird.

Durch die Auswertung des reifendruckabhängigen Parameters kann der Zeitabstand für die Übertragung der Reifendruckmesswerte von der Reifendrucksensoreinrichtung, d. h. von der Sendeeinheit zu der mit der Fahrzeugelektronik verbundenen Empfangseinheit vom jeweiligen Fahrzustand des Fahrzeugs und dem jeweiligen Zustand des Reifens eingestellt werden, wobei sich im Ruhezustand des Fahrzeugs und damit des Reifens eine maximale Zeitperiode zwischen der Übertragung der Reifendruckmesswerte ergibt, die sich jedoch ständig verkürzt, je größer die Druckänderung in dem Fahrzeug werden, die durch den reifendruckabhängigen Parameter wiedergegeben werden, und die aufgrund der Fahrt mit unterschiedlichen Geschwindigkeiten auf unterschiedlichen Fahrbahnen resultieren. Im Falle einer Beschädigung des Reifens, d. h. aufgrund eines Druckverlustes oder einer Verformung des Reifens, die auf eine Beschädigung des Reifens hindeuten, werden die aktuellen Reifendruckmessergebnisse mit einer minimalen Zeitperiode zwischen den einzelnen Übertragungen übermittelt.

Eine erfindungsgemäße Weiterbildung des Verfahrens zur Einstellung der Häufigkeit der Übertragung der erfassten Reifendruckwerte besteht nun darin, die zeitliche Änderung bzw. Änderungsrate des Druckverlaufs in einem Fahrzeugreifen zu erfassen, wobei die Änderungsrate des Druckverlaufs im folgenden als der Druckdynamikzustand in einem Fahrzeugreifen bezeichnet wird. Hohe Änderungsraten des Druckverlaufs führen somit zu einem erhöhten Druckdynamikzustand, während niedrige Änderungsraten des Druckverlaufs dementsprechend zu einem niedrigen Druckdynamikzustand in dem Fahrzeugreifen führen. Erfindungsgemäß werden die momentanen Druckdynamikzustände in unterschiedliche Klassen eingeteilt, wobei die unterschiedlichen Klassen bzw. Klassifizierungen der Druckdynamikzustände unterschiedliche Änderungen der Druckverläufe in einem Fahrzeugreifen, d. h. Änderungen der erfassten Reifendruckmesswerte mit einer geringeren oder mit einer höheren Dynamik, beschreiben. Aufgrund dieser Klassifizierung wird nun erfindungsgemäß der Abstand zwischen aufeinanderfolgenden Übertragungen der gemessenen Reifendruckmesswerte festgelegt, wobei im Fall einer geringen Druckänderungsdynamik in dem Fahrzeugreifen relativ lange zeitliche Abstände, z. B. 20 Minuten, und im Fall einer hohen Druckänderungsdynamik relativ kurze zeitliche Abstände, z. B. 20 Sekunden, zwischen aufeinanderfolgenden Übertragungen der gemessenen momentanen Reifendruckmesswerte eingestellt werden.

Das erfindungsgemäße Konzept nutzt dabei aus, dass sich im Fahrbetrieb eines Fahrzeugs dynamische Lastumverteilungen ergeben, die zu einer typischen Veränderung des Gasdrucks, d. h. zu auswertbaren Druckdynamikzuständen, in einem oder mehreren Reifen des Fahrzeugs führen. Beispielsweise werden in einer Kurve die äußeren Räder stärker belastet, so dass folglich der Druck in diesen Reifen ansteigt, während der Reifendruck in den Reifen der kurveninneren, entlasteten Räder sinkt. Entsprechende typische Reifendruckänderungen zwischen den Rädern der Hinterachse und der Vorderachse des Fahrzeugs treten beim Bremsen oder Beschleunigen des Fahrzeugs auf. Weitere Druckänderungen, die auf einen Fahrbetrieb des Fahrzeugs schließen lassen, treten beispielsweise beim Überfahren von Bodenunebenheiten auf.

Die im Fahrbetrieb des Fahrzeugs zu erwartenden Druckänderungen in den Fahrzeugreifen weisen im allgemeinen bedingt durch die Dauer typischer Fahrsituationen eine spezifische Dynamik von wenigen Sekunden auf. Derartige Reifendruckänderungen in den Fahrzeugrädern sind im Stillstand bzw. Parkzustand des Fahrzeugs nicht zu erwarten, da der Reifendruck in einem intakten Reifen in diesem Fall nur aufgrund von Temperaturänderungen schwankt und somit eine weit geringere Dynamik in einem Bereich von Minuten oder Stunden bezüglich der Reifendruckänderungen auftritt.

Erfindungsgemäß werden nun die Reifendruckänderungen oder auch andere erfasste Reifenzustandsparameter ausgewertet und sogenannte Druckdynamikzustände ermittelt. Die ermittelten Druckdynamikzustände können nun in unterschiedliche Klassen von Druckdynamikzuständen eingeteilt werden, die unterschiedliche Fahrsituationen des Fahrzeugs wiedergeben, so dass ohne einen Beschleunigungssensor oder einen andersartig ausgeführten Rolldetektor eine Aussage bzw. Entscheidung getroffen werden kann, in welcher Fahrsituation sich das Fahrzeug entsprechend eines ermittelten niedrigen oder hohen Druckdynamikzustands gerade befindet.

Abhängig von dem ermittelten Druckdynamikzustand bzw. von der Einstufung in eine bestimmte Klasse für die Druckdynamikzustände kann nun wieder erfindungsgemäß der zeitliche Abstand zwischen aufeinanderfolgenden Übertragungen der gemessenen Reifendruckmesswerte festgelegt werden.

Im Gegensatz zu im Stand der Technik bekanten Beschleunigungssensoren, bei denen die Zentrifugalkraft an dem Fahrzeugrad gemessen wird, die direkt von der Raddrehzahl und damit unmittelbar von der Geschwindigkeit des Fahrzeugs abhängt, sollte bezüglich der vorliegenden Erfindung beachtet werden, dass die schnellen, dynamischen Reifendruckänderungen, die erfindungsgemäß ausgewertet werden, zwar im allgemeinen auch beim Fahrbetrieb des Fahrzeugs auftreten, aber nicht direkt mit der Drehzahl des Rades sondern vielmehr mit den Lastverhältnissen beim Kurvenfahren und beim Beschleunigen bzw. Bremsen und mit den Fahrbahnverhältnissen verknüpft sind. Auf einer ideal glatten und geraden Fahrbahn mit konstanter Geschwindigkeit und Richtung würde sich der Druck in einem idealen Reifen ohne Profil und Unwucht nicht ändern. Die Weiterentwicklung der erfindungsgemäßen Verfahrens zur Einstellung der Häufigkeit der Übertragung der erfassten Reifendruckwerte besteht nun darin, das eine sog. Clusterung oder Klassifizierung der erfassten Reifendruckmesswerte in Druckdynamikzustände bzw. -kategorien vorgenommen wird.

Ein anschaulicher Vorteil liegt darin, dass ein Druckverlust bei einem geparkten Auto nicht zu einer fälschlichen Ermittlung eines Fahrzustands des Fahrzeugs wohl aber zu einer erhöhten Druckdynamikzustand des Reifens führt. Das gleiche gilt auch für das Aufpumpen des Reifens an der Tankstelle oder die Erhöhung der Gewichtsbelastung beim Einsteigen oder beim Beladen des Autos.

Zusätzlich oder alternativ zu der geeigneten Einstellung des zeitlichen Abstands zwischen aufeinanderfolgenden Übertragungen der aktuellen Reifendruckmessergebnisse eines Reifendrucksensors oder anderer Reifenzustandsparameter ist es mit der vorliegenden Erfindung ferner möglich, entsprechend des jeweils ermittelten Druckdynamikzustands oder der jeweiligen Klassifizierung der Druckdynamikzustände eine momentane Fahrsituation des Fahrzeugs zu ermitteln, wobei nun abhängig von der ermittelten momentanen Fahrsituation des Fahrzeugs ferner der zeitliche Abstand $\Delta T_{mess}$ zwischen aufeinanderfolgenden Erfassungszeitpunkten der Reifendruckmesswerte, die durch die Reifendruckmesseinrichtung erfasst werden, entsprechend eingestellt werden kann. Dabei wird vorzugsweise bei einer Klassifizierung für niedrigere Druckdynamikzustände in dem Reifen des Fahrzeugs der zeitliche Abstand zwischen aufeinanderfolgenden Erfassungszeitpunkten länger gewählt als der zeitliche Abstand zwischen aufeinanderfolgenden Erfassungszeitpunkten bei einer Klassifizierung für höhere Druckdynamikzustände in dem Reifen des Fahrzeugs. Dies liefert ein weiteres Energieeinsparpotential bei der Überwachung eines Fahrzeugreifens.

Durch das erfindungsgemäße Konzept zum Überwachen eines Reifendruck in einem Reifen eines Fahrzeuges ergeben sich eine Reihe von Vorteilen.

So können mit batteriebetriebenen Reifendrucksensoranordnungen die erforderlichen Messungen des Reifendrucks über die gesamte angestrebte Lebensdauer, die in der Größenordnung von zehn Jahren liegen kann, einer Reifendrucksensoranordnung gewährleistet werden, da sich die Reifendrucksensoranordnung in einem Energiesparbetrieb (power saving operation) befindet, so dass die Leistungsaufnahme der Anordnung äußerst gering ist, solange keine kritische Veränderung des Reifendrucks auftritt. Wenn jedoch eine kritische Veränderung des Reifendrucks auftritt, die auf einen Gasverlust bzw. auf eine Beschädigung des Reifens hinweist, wird ein möglichst kurzer Zeitabstand zwischen den übermittelten aktuellen Reifendruckmesswerten verwendet, um äußerst zuverlässig und sehr schnell Änderungen des Reifendrucks erkennen zu können und diese auszuwerten, wenn dies erforderlich ist.

Da bei der vorliegenden Erfindung ferner ein aus den erfassten Reifendruckmesswerten abgeleiteter, reifendruckabhängiger Parameter verwendet wird, aus dem auf die physikalischen Zustandsparameter, d. h. auf den Druck im Reifen abhängig von dem Fahrzustand des Fahrzeugs, geschlossen werden kann, ist bei der vorliegenden Erfindung kein zusätzlicher Beschleunigungssensor oder Bewegungsschalter zur Erfassung des Fahrzustands des Fahrzeugs erforderlich, dessen Auswertung einerseits einen zusätzlichen schaltungstechnischen Aufwand bedeutet, und damit andererseits den Stromverbrauch, d. h. die Leistungsaufnahme, der Reifendrucksensoranordnung erhöhen würde.

Bei der vorliegenden Erfindung wird ferner ermöglicht, dass die aktuellen Reifendruckmesswerte und optional auch andere erfasste und ausgewertete Daten regelmäßig mit einer vorgegebenen Mindesthäufigkeit, z. B. stündlich, an eine Zentraleinheit im Fahrzeug, z. B. an den Bördcomputer, übertragen werden, um der Zentraleinheit die Überwachung der Funktionstüchtigkeit der Reifendrucksensoranordnung zu ermöglichen. Andererseits ermöglicht die vorliegende Erfindung, dass Druckänderungen äußerst frühzeitig an die Zentraleinheit übermittelt werden, so dass Beschädigungen des Reifens frühestmöglich erkannt werden können.

Ferner ermöglicht die vorliegende Erfindung, dass zusätzlich zu dem aktuellen Reifendruckmesswert weitere Informationen zu der Zentraleinheit übermittelt werden können, die dann sinnvoll ausgewertet werden können, wenn der Reifendruck in einem konstanten Zeitabstand erfasst wird. Diese zusätzlichen Informationen sind beispielsweise tiefpassgefilterte Druckwerte oder gleitende Mittelwerte der erfassten Reifendruckmesswerte, die Abweichung der Messung des Reifendruckmesswertes vom Vorgängerwert oder einem tiefpassgefilterten oder gemittelten Wert, oder beispielsweise statistische Werte auf der Grundlage der erfassten Reifendruckmesswerte, wie z. B. Maßzahlen für Gradienten oder Varianzen der Messwerte über einen bestimmten Beobachtungszeitraum.

Diese zusätzlichen Daten können äußerst nützlich dabei eingesetzt werden, beispielsweise eine exakte Beurteilung des Reifenzustands über eine längere Zeitperiode vorzunehmen.

Bezüglich der erfindungsgemäßen Vorgehensweise zur Klassifizierung der ermittelten Druckdynamikzustände in dem Fahrzeugreifen und damit der Ermittlung der momentanen Fahrsituation des Fahrzeugs aus den erfassten Reifendruckmesswerten ergeben sich eine Reihe von weiteren Vorteilen bezüglich der Überwachung eines Reifendrucks in einem Reifen eines Kraftfahrzeugs.

So wird es ermöglicht, dass die Leistungsaufnahme einer batteriebetriebenen Reifendrucküberwachungseinrichtung weiter gesenkt werden kann, um die Messungen des Reifendrucks oder anderer Reifenspezifischer Parameter über die gesamte Lebensdauer eines Reifenüberwachungssystems durchführen zu können, wobei das Reifenüberwachungssystem beispielsweise in der Reifenfelge angeordnet ist und eine Lebensdauer in der Größenordnung von mehreren Jahren aufweisen soll.

Dies wird nun erfindungsgemäß erreicht, indem aus einer Mehrzahl von vorangehenden Reifendruckmesswerten eine Klassifizierung des Druckdynamikzustände ermittelt wird, woraufhin der zeitliche Abstand zwischen aufeinanderfolgenden Erfassungszeitpunkten und/oder Übertragungszeitpunkten der Reifendruckmesswerte abhängig von der ermittelten momentanen Fahrsituation eingestellt wird. Dadurch wird erreicht, dass bei Fahrsituationen mit (relativ) geringen Druckdynamikzuständen in den Fahrzeugreifen auch eine geringere Anzahl von Messungen der Reifendruckwerte vorgenommen werden kann, so dass in dieser Fahrsituation der Energieverbrauch der erfindungsgemäßen Reifenüberwachungsanordnung weiter verringert werden kann.

Ferner wird es ermöglicht, durch die Frequenz der Reifendruckmessungen, d. h. durch die geeignete Einstellung des zeitlichen Abstands zwischen aufeinanderfolgenden Erfassungszeitpunkten, die Zeitdauer beeinflussen zu können, die von dem Reifendrucküberwachungssystem benötigt wird, bis ein Zustandswechsel der Fahrsituation des Fahrzeugs, beispielsweise von einem Ruhezustand in einen Fahrzustand, erkannt wird.

Die vorliegende Erfindung ermöglicht also, dass durch die ermittelten Druckdynamikzustände in einem Fahrzeugreifen der Übertragungszeitpunkt eines gemessenen Reifendruckmesswerts festgelegt wird, wobei ferner durch eine geeignete Klassifizierung der ermittelten Druckdynamikzustände erfindungsgemäß der Abstand zwischen aufeinanderfolgenden Übertragungszeitpunkten der gemessenen Reifendruckmesswerte und/oder der Abstand zwischen aufeinanderfolgenden Erfassungszeitpunkten der Reifendruckmesswerte festgelegt werden kann.

Bevorzugte Ausführungsbeispiele der vorliegenden Erfindung werden nachfolgend unter Bezugnahme auf die beiliegenden Zeichnungen näher erläutert. Es zeigen:

Fig. 1      ein Flussdiagramm für ein Verfahren zum Überwachen eines Reifendrucks in einem Reifen eines Fahrzeugs gemäß der vorliegenden Erfindung;

Fig. 2a-c      in Diagrammform die Vorgehensweise zur Ermittlung der Häufigkeit der Übertragung der Reifendruckmesswerte von einer Sendeeinheit an eine Empfangseinheit in Abhängigkeit des Reifendrucks und des Betrags der Messwertänderung gemäß der vorliegenden Erfindung;

Fig. 3      in Diagrammform die Vorgehensweise zur Ermittlung der Häufigkeit der Übertragung der Reifendruckmesswerte in Abhängigkeit einer aus dem Druckverlauf erhaltenen statistischen Größe (Standardabweichung) gemäß der vorliegenden Erfindung;

Fig. 4a-b      eine prinzipielle Darstellung der Änderung des Zeitabstands für die Übertragung der Reifendruckmesswerte in Abhängigkeit des Fahrzustands des Fahrzeugs und des Reifenzustands;

Fig. 5a-c      in Diagrammform die Vorgehensweise zur Klassifizierung der Druckdynamikzustände in einem Reifen eines Kraftfahrzeugs, wobei Fig. 5a einen beispielhaft ermittelten Verlauf von Druckmesswerten im Reifen und deren Kurzzeitmittelwerte, Fig. 5b Druckschwankungen, und Fig. 5c Abweichungsquadrate der Druckschwankungen, gefilterte Abweichungsquadrate und die ermittelte Fahrsituation darstellt;

Fig. 6      ein Flussdiagramm mit den verschiedenen Verfahrensschritten zum Ermitteln und Klassifizieren von Druckdynamikzuständen in einem Reifen eines Fahrzeugs gemäß dem erfindungsgemäßen Verfahren; und

Fig. 7      eine Prinzipdarstellung in Blockdiagrammform einer Vorrichtung zum Überwachen eines Reifendrucks in einem Fahrzeugreifen gemäß der vorliegenden Erfindung.

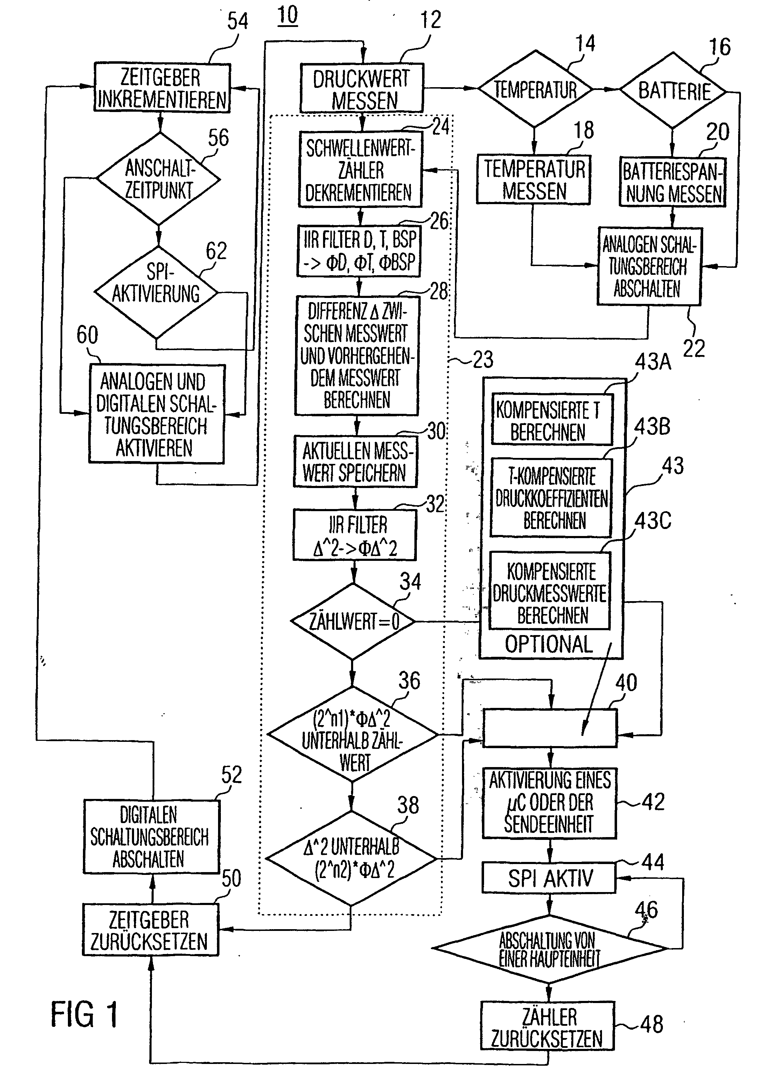

Bezug nehmen auf Fig. 1 wird nun anhand eines Flussdiagramms ein bevorzugtes Ausführungsbeispiel der vorliegenden Erfindung zur Überwachung eines Reifendrucks in einem Fahrzeugreifen detailliert erörtert.

Wie in Kästchen 12 des Flussdiagramms 10 von Fig. 1 gezeigt ist, beginnt das Verfahren zum Überwachen eines Reifendrucks in einem Fahrzeugreifen damit, zeitlich aufeinanderfolgende Reifendruckmesswerte zu erfassen. Ferner wird, wie in Kästchen 14 und 16 des Flussdiagramms 10 gezeigt ist, zusätzlich optional die Temperatur des Reifens bzw. die Gastemperatur in dem Reifen und der Batteriezustand, d. h. die Batteriespannung, erfasst. Die Werte werden dann zusammen mit dem aktuellen Reifendruckmesswert als Temperaturmesswert und Batteriespannungsmesswert bereitgestellt, wie dies in den Kästchen 18 und 20 des Flussdiagramms 10 dargestellt ist. Nachdem die physikalischen Zustandsgrößen des Fahrzeugreifens erfasst und die Batteriespannung ermittelt wurde, wird die Leistungsversorgung für die Messeinrichtungen abgeschaltet, wie dies in dem Kästchen 22 (power down analog) dargestellt ist.

Die ermittelten physikalischen Zustandsgrößen werden nun einer Steuer- und Auswertungseinheit zur Weiterverarbeitung zur Verfügung gestellt, wie dies durch das Kästchen 23, das die Kästchen 24-38 des Flussdiagramms 10 umfasst, dargestellt ist.

Wie in Kästchen 24 von Fig. 1 dargestellt, wird bei dem nächsten Verfahrensschritt der Schwellwertzähler dekrementiert, wobei dieser Schritt mit jedem Durchlauf des Verfahrens durchgeführt wird. Die bevorzugte Ausführungsform dieses Schwellwertzählers ist beispielsweise ein IIR-Digitalfilter (IIR = infinite impulse response), in dem das Dekrement als Bruchteil (0 < b < 1) des aktuellen Werts berechnet wird. Dabei stellen die Koeffizienten a, b die Filterkoeffizienten dar.

Bei einer ersten Ausführungsform ist das IIR-Digitalfilter ein Tiefpassfilter 1. Ordnung. Daraus ergibt sich die folgende Übertragungsfunktion des Filters:

$$H_{IIR}(z) = \frac{a}{1 - b \cdot z^{-1}}$$

Bei einer zweiten möglichen Ausführungsform ist das IIR-Digitalfilter ein Tiefpassfilter 2. Ordnung. Daraus ergibt sich die folgende Übertragungsfunktion des Filters:

$$H_{IIR}(z) = \left( \frac{a}{1 - b \cdot z^{-1}} \right)^2$$

Die optionale Verwendung eines Tiefpassfilters 2. Ordnung bewirkt eine noch größere Differenzierung der durch das Verfahren berechneten Zeitabstände der Einschaltvorgänge (wake up). Diese Ausführungsform benötigt dafür aber eine aufwändigere Hardware-Anordnung.

In Kästchen 26 von Fig. 1 ist nun als nächster Schritt dargestellt, dass ein Filter dazu verwendet wird, einen Mittelwert über die drei Messgrößen Druck, Temperatur und Batteriespannung zu berechnen. Diese Mittelung wird zur nachfolgenden Berechnung der Abweichung des aktuellen Messwerts benötigt. Darüber hinaus kann durch diese Filterung eine Erhöhung der Messgenauigkeit erreicht werden, da das Tiefpassfilter den in den Einzelwerten enthaltenen Rauschanteil dämpft.

Die Ausführungsform des bei diesem Schritt verwendeten Filters ist vorzugsweise mit dem IIR-Digitalfilter aus Kästchen 24 identisch, da in diesem Fall die gleiche Hardware-Anordnung verwendet werden kann. Die Koeffizienten a und b des Filters müssen allerdings unterschiedlich gewählt werden und sind in diesem Fall beispielsweise programmierbar über eine serielle Schnittstelle auszulegen.

Bei dem in Kästchen 28 dargestellten Verfahrensschritt wird nun die Differenz zwischen dem aktuellen Abtastwert und dem gefilterten Wert, der bei dem Verfahrensschritt von Kästchen 26 erhalten wird, berechnet.

Bei dem in Kästchen 30 dargestellten Verfahrensschritt werden der aktuelle Messwert und der neuberechnete Mittelwert gespeichert. Die gespeicherten Werte können aus diesem Speicher beispielsweise über eine serielle Schnittstelle ausgelesen werden.

Bei dem in Kästchen 32 dargestellten Verfahrensschritt wird die bei dem in Kästchen 28 dargestellten Verfahrensschritt berechnete Differenz quadriert und anschließend tiefpassgefiltert. Das Resultat dieser Filterung dient als Näherungswert für die Standardabweichung. Als bevorzugte Ausführungsform wird wiederum vorzugsweise aus Gründen der Hardwaremehrfachnutzung das gleiche Filter wie bei den in Kästchen 24 und Kästchen 26 dargestellten Verfahrensschritten verwendet, wobei wiederum die Filterkoeffizienten a und b über eine serielle Schnittstelle programmierbar ausgelegt sind.

Bei dem in Kästchen 34 dargestellten Verfahrensschritt wird nun eine Sicherheitsabfrage ausgeführt, um zu vermeiden, dass der Zähler überläuft. Falls dies festgestellt wird, wird ein Einschaltvorgang (wake up) ausgelöst und der Zähler wird auf seinen Startwert zurückgesetzt.

Bei dem in Kästchen 36 dargestellten Verfahrensschritt wird nun geprüft, ob der Zähler (siehe Kästchen 24) den Näherungswert der Standardabweichung (siehe Kästchen 32) unterschreitet. Gegebenenfalls wird ein Einschaltvorgang (wake up) ausgelöst und der Zähler wird auf seinen Startwert zurückgesetzt.

Bei dem in Kästchen 38 dargestellten Verfahrensschritt wird nun geprüft, ob der aktuelle Messwert größer ist als ein Vielfaches der genäherten Standardabweichung. Gegebenenfalls wird ein Einschaltvorgang (wake up) ausgelöst und der Zähler wird auf seinen Startwert zurückgesetzt. Diese zweite Abfrage gewährleistet eine unmittelbare Reaktion auf große Änderungen des Messwerts. Die gewählte Vielfachheit der genäherten Standardabweichung ist wiederum über eine serielle Schnittstelle programmierbar.

Wie in Kästchen 40 des Flussdiagramms 10 dargestellt ist, wird nun, wenn der Wert des reifendruckänderungsabhängigen Parameters eine vorgegebene Schwelle erreicht, der diesen Zeitpunkt entsprechende aktuelle Reifendruckmesswert bereitgestellt.

Wie in Kästchen 43 des Flussdiagramms 10 dargestellt ist, kann optional eine Temperaturkompensation des erfassten Reifendruckmesswertes durchgeführt werden. Wie in Kästchen 43a dargestellt ist, kann beispielsweise eine sog. kompensierte Temperatur berechnet werden. Die kompensierte Temperatur wird vorzugsweise berechnet, da der verwendete Temperatursensor im allgemeinen Fertigungsschwankungen unterworfen ist, die zu Exemplarstreuungen führen. Dazu wird ein additiver Koeffizient zur Offsetkorrektur zu dem aktuellen Messwert hinzuaddiert und anschließend ein multiplikativer Koeffizient zur Empfindlichkeitskorrektur verwendet. Nach einer Korrektur mit diesen beiden Koeffizienten liefert jeder Temperatursensor im Rahmen der vorgesehenen Abgleichgenauigkeit den gleichen Messwert.

Wie in Kästchen 43b dargestellt ist, können beispielsweise auch sog. temperaturkompensierte Druckkoeffizienten berechnet werden. Diese Berechnung wird durchgeführt, da auch der Drucksensor, wie der Temperatursensor (siehe Kästchen 43a), im allgemeinen Fertigungsschwankungen unterliegt, die zu einer Exemplarstreuung führen. Bei dem Drucksensor kommt eine deutliche Abhängigkeit der Parameter von der Temperatur hinzu. Um wiederum eine Reproduzierbarkeit der Druckmessung zu erreichen, wird der aktuelle Messwert gemäß eines quadratischen Polynoms korrigiert. Um darüber hinaus die Temperaturabhängigkeit zu beseitigen, werden die drei Koeffizienten, Offset, lineare Empfindlichkeitskorrektur, quadratische Empfindlichkeitskorrektur, jeweils mit einem Temperaturkorrekturfaktor abhängig von der zuvor berechneten Temperatur korrigiert, bevor das Polynom berechnet wird.

Ferner können, wie in Kästchen 43c dargestellt ist, kompensierte, wie z. B. temperaturkompensierte, Reifendruckmesswerte berechnet werden.

Nachdem also der reifendruckänderungsabhängige Parameter einen vorgegebenen Schwellenwert erreicht hat, wird der entsprechende aktuelle Reifendruckmesswert von einer Sendeeinrichtung der Reifendrucksensoranordnung an eine Empfangseinheit, die beispielsweise der Zentraleinheit der Fahrzeugelektronik zugeordnet ist, übermittelt, wie dies in Kästchen 42 des Flussdiagramms 10 durch die Aktivierung eines μProzessors (μC) oder der Sendeeinheit (transmitter) dargestellt ist.

Wie in Kästchen 44 und 46 des Flussdiagramms 10 dargestellt ist, wird eine serielle Peripherieschnittstelle aktiviert, bzw. ist aktiv, die nach der Übertragung des Reifendruckmesswertes von einer Haupteinheit (power down from master) abgeschaltet wird. Als nächstes wird der Zähler auf seinen Startwert, z. B. auf Null "0", zurückgesetzt, wie dies in Kästchen 48 des Flussdiagramms 10 dargestellt ist. Daraufhin wird der Zeitgeber zurückgesetzt, Kästchen 50, woraufhin der digitale Schaltungsbereich der Reifendrucksensoranordnung abgeschaltet wird, wie dies in Kästchen 52 des Flussdiagramms 10 dargestellt ist.

Wie in Kästchen 54 des Flussdiagramms 10 dargestellt ist, wird nun der Zeitgeber inkrementiert, und der Anschaltzeitpunkt (wake up time) für die analoge und digitale Schaltung vorgegeben, siehe Kästchen 56 und 60, wobei wiederum die serielle Peripherieschnittstelle aktiviert wird, siehe Kästchen 62.

Mit der Aktivierung der analogen und digitalen Schaltungskomponenten der Reifendrucksensoranordnung beginnt nun wiederum die Erfassung eines darauffolgenden Reifendruckmesswertes, wie dies in Kästchen 12 des Flussdiagramms 10 dargestellt ist.

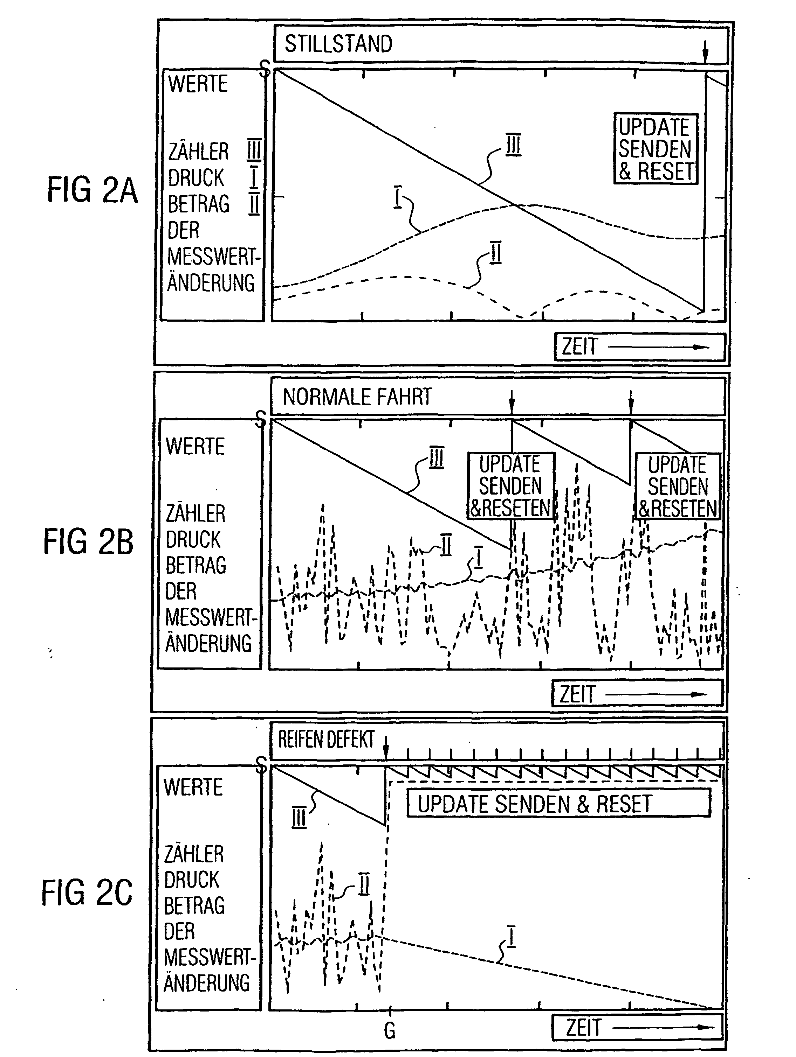

Im folgenden wird nun anhand der in den Figuren 2a-c dargestellten Diagramme erläutert, wie das erfindungsgemäße Verfahren zum Überwachen eines Reifendrucks in einem Fahrzeugreifen durchgeführt wird.

In Fig. 2a ist als Verlauf I der Reifendruck, d. h. der Verlauf der erfassten Reifendruckmesswerte, in dem Fahrzeugreifen über der Zeit dargestellt. Der Verlauf II zeigt nun die Änderung des Verlaufs des Reifendrucks in dem Fahrzeugreifen, d. h. den Gradienten. Der Verlauf III zeigt den Zählerstand eines Zählers, der beginnend bei einem Startwert "S" jeweils um einen festen Wert dekrementiert wird, so dass die Schwelle für das Auslösen eine Übertragung eines Reifendruckmesswertes abhängig von dem Zählerstand sinkt.

Wie in Figur 2a dargestellt ist, wird dann die Übertragung eines erfassten aktuellen Reifendruckmesswerts ausgelöst, wenn der Zählerstand, der den Schwellenwert für das Auslösen einer Übertragung darstellt, den Verlauf für den Betrag der Messwertänderung, d. h. den Verlauf des reifendruckänderungsabhängigen Parameters, erreicht.

Es sollte beachtet werden, dass in den Figuren 2a-c der Betrag der Messwertänderung des Reifendruckes lediglich beispielhaft als der reifendruckänderungsabhängige Parameter gewählt wurde, wobei ein beliebiger reifendruckänderungsabhängiger Parameter verwendet werden kann, der aus dem erfassten Reifendruckmesswerten bestimmt wird, um mit dem Zählerstand verglichen zu werden, um die Übertragung des Reifendruckmesswertes auslösen, wenn der Zählerstand diesen reifendruckänderungsabhängigen Parameter erreicht oder unterschreitet.

Das in Figur 2b dargestellte Diagramm zeigt nun als Verlauf I den Verlauf der erfassten Reifendruckmesswerte während der Fahrt eines Kraftfahrzeugs, wobei sich der temperaturbedingten Änderung des Reifendrucks hier ferner eine Änderung des Reifendrucks durch die Verformung des Reifens bei Kurvenfahrten oder durch das Überfahren von Unebenheiten überlagert. Der Verlauf II stellt wiederum den Betrag der Messwertänderung der Reifendruckmesswerte dar. Es ist zu erkennen, dass dieser Verlauf II relativ große Schwankungen zeigt.

Der Verlauf III stellt wieder den Zählerstand des Zählers dar, der beginnend bei einem Startwert S dekrementiert wird. Der Zählerstand wird wieder mit dem von den erfassten Reifendruckmesswerten abgeleiteten, reifendruckänderungsabhängigen Parameter verglichen, wobei die Übertragung des Reifendruckmesswertes wieder ausgelöst wird, wenn der Zählerstand den reifendruckänderungsabhängigen Parameter erreicht oder unterschreitet.

Da sich, wie in Figur 2a dargestellt, der Reifendruck eines beispielsweise parkenden Fahrzeugs bedingt durch die Änderung der Umgebungstemperatur nur langsam verändert, ergibt sich eine sehr geringe Übertragungsrate des erfassten Reifendruckmesswertes, d. h. die Reifendruckmesswerte werden mit einer sehr geringen Häufigkeit von der Sendeeinheit der Reifendrucksensoranordnung zu einer Empfangseinheit übertragen.

Da der Verlauf II des Betrags der Messwertänderungen sehr starke Schwankungen aufweist, wird in diesem Fall erheblich früher als in dem in Figur 2a dargestellten Diagramm eine Übertragung des Reifendruckmesswertes ausgelöst, da der Zählerstand erheblich früher den reifendruckänderungsabhängigen Parameter erreicht bzw. unterschreitet. Aufgrund der relativ großen Schwankungen des Verlaufs II des Betrags der Messwertänderung reagiert nun das System mit einer erhöhten Übertragungsrate.

In Figur 2c ist nun in Form eines Diagramms dargestellt, wie sich der Verlauf I des Reifendrucks, der Verlauf II des Betrags der Messwertänderung und der Zählerstand III verändert, wenn ein kontinuierlicher Druckverlust in dem Fahrzeugreifen, beispielsweise aufgrund einer Beschädigung des Reifens, auftritt.

Aufgrund des kontinuierlichen Druckverlustes in dem Fahrzeugreifen fällt der Reifendruck ab dem Zeitpunkt C kontinuierlich ab. Ab diesem Zeitpunkt steigt der Betrag Messwertänderung II extrem schnell auf einen Maximalwert an, wodurch nach dem Auftreten des Druckverlustes in dem Reifen beispielsweise jedes Mal, wenn ein neuer Reifendruckmesswert erfasst wird, eine Übertragung des erfassten aktuellen Reifendruckmesswerts ausgelöst wird.

Das in den Figuren 2a-c anhand von Diagrammen dargestellte erfindungsgemäße Verfahren zum Überwachen eines Reifendrucks in einem Fahrzeugreifen lässt sich also folgendermaßen zusammenfassen.

Eine Sensoreinrichtung wird beispielsweise durch einen EinschaltZeitgeber (wake up timer) in regelmäßigen Abständen, z. B. eine Sekunde, aktiviert, um eine Erfassung des aktuellen Reifendruckmesswertes vorzunehmen. Mit jeder erfolgten Messung wird ein Zähler beginnend bei dem Startwert S dekrementiert. Aus dem zeitlich aufeinander folgenden Reifendruckmesswerten (Verlauf I) wird ein reifendruckänderungsabhängiger Parameter (Verlauf II) abgeleitet, wie z. B. der Gradient (die Änderung) des Druckverlaufs, wobei dieser Parameter mit dem Zählerstand verglichen wird. Erreicht nun der Zählerstand, der kontinuierlich dekrementiert, den reifendruckänderungsabhängigen Parameter wird eine Übertragung des aktuellen Reifendruckmesswerts vorgenommen, d. h. eine Sendeeinheit wird aktiviert, um den aktuellen Reifendruckmesswert an eine Empfangseinheit zu übertragen. Daraufhin wird der Zähler wieder auf den Startwert S zurückgesetzt und der Reifendrucküberwachungszyklus beginnt von Neuem.

Entsprechend einer weiteren möglichen Ausführungsform des erfindungsgemäßen Verfahrens zur Überwachung eines Reifendrucks in einem Fahrzeugreifen ist es natürlich auch denkbar, dass der abgeleitete reifendruckänderungsabhängige Parameter dem Zählerstand hinzuaddiert wird, wobei der Zähler nach jedem Auslösen eine Übertragung auf einen Startwert S , z. B. auf Null "0", gesetzt wird und nach jeder Erfassung eines Reifendruckmesswertes inkrementiert (erhöht) wird. Die Übertragung eines aktuellen Reifendruckmesswertes wird dann bei dieser Ausführungsform ausgelöst, wenn die Summe aus dem reifendruckänderungsabhängige Parameter und dem Zählerstand des Zählers eine vorgegebene feste Schwelle überschreitet.

Eine weitere Möglichkeit, den Zählerstand des Zählers mit dem reifendruckänderungsabhängige Parameter zu kombinieren, besteht ferner darin, dass beide Werte, d. h. der Zählerstand und der Parameter, multipliziert werden. Der Vorteil einer Multiplikation des Zählerstands mit dem reifendruckänderungsabhängigen Parameter besteht darin, dass dadurch eine starke Dynamik des sich aus der Multiplikation ergebenden Verlaufs erzeugt wird, so dass eine höhere Auflösung bei der Überwachung des Reifendrucks in einem Fahrzeugreifen erreichbar ist.

Ferner sollte beachtet werden, dass der aus den erfassten Reifendruckmesswerten abgeleitete reifendruckänderungsabhängige Parameter, der mit dem jeweiligen Zählerstand verglichen wird, auch aus statistischen Werten bestehen kann, mittels derer die Häufigkeit der Übertragung des aktuellen Reifendruckmesswertes zu einer Empfangseinheit abgeleitet werden kann.

Der reifendruckänderungsabhängige Parameter kann dabei beispielsweise die Differenz zweier aufeinander folgender erfasster Reifendruckmesswerte sein. Der reifendruckänderungsabhängige Parameter kann ferner das Quadrat der Differenz zweier aufeinander folgender Reifendruckmesswerte sein. Als reifendruckänderungsabhängige Parameter kann ferner die Differenz des erfassten Reifendruckmesswerts zu einem tiefpassgefilterten oder gemittelten Wert der zeitlich aufeinander folgenden erfassten Reifendruckmesswerte verwendet werden. Als der reifendruckänderungsabhängige Parameter kann auch das Quadrat der Differenz eines erfassten Reifendruckmesswertes zu einem tiefpassgefilterten oder gemittelten Werts einer Mehrzahl von zeitlich aufeinander folgenden, erfassten Reifendruckmesswerten verwendet werden.

Als reifendruckänderungsabhängige Parameter kann ferner die Standardabweichung einer Mehrzahl von zurückliegenden zeitlich aufeinander folgenden erfassten Reifendruckmesswerten verwendet werden. Als der reifendruckänderungsabhängige Parameter kann darüber hinaus ein gemittelter oder gefilterter Wert der im vorhergehenden aufgeführten reifendruckänderungsabhängigen Parameter verwendet werden.

Ferner sollte beachtet werden, dass bei dem erfindungsgemäßen Verfahren zum Überwachen eines Reifendrucks in einem Fahrzeugreifen ferner anstelle des Überschreitens eines Zählwerts auch das Überschreiten einer statistischen Messgröße, wie z. B. eines Vielfachen der Standardabweichung der letzten zurückliegenden erfassten Reifendruckmesswerte, oder einer anderen Messgröße, wie z. B. der Varianz der zurückliegenden Reifendruckmesswerte, herangezogen werden kann, wobei auch diese Werte nochmals gemittelt oder gefiltert werden können.

Ferner ist es möglich, diese Werte mit einem Zähler zu verrechnen. Die Verrechnung der statistischen Messgröße mit einem Zählerstand kann beispielsweise so aussehen, dass die statistische Größe als Zählerdekrement gewählt wird. Diese Variante ermöglicht eine stärkere Differenzierung des Übertragungsabstände, weil nicht nur der Schnittpunkt zwischen Zähler und Schwellwert höher liegt, sondern der Zählerstand zusätzlich auch noch schneller dekrementiert wird.

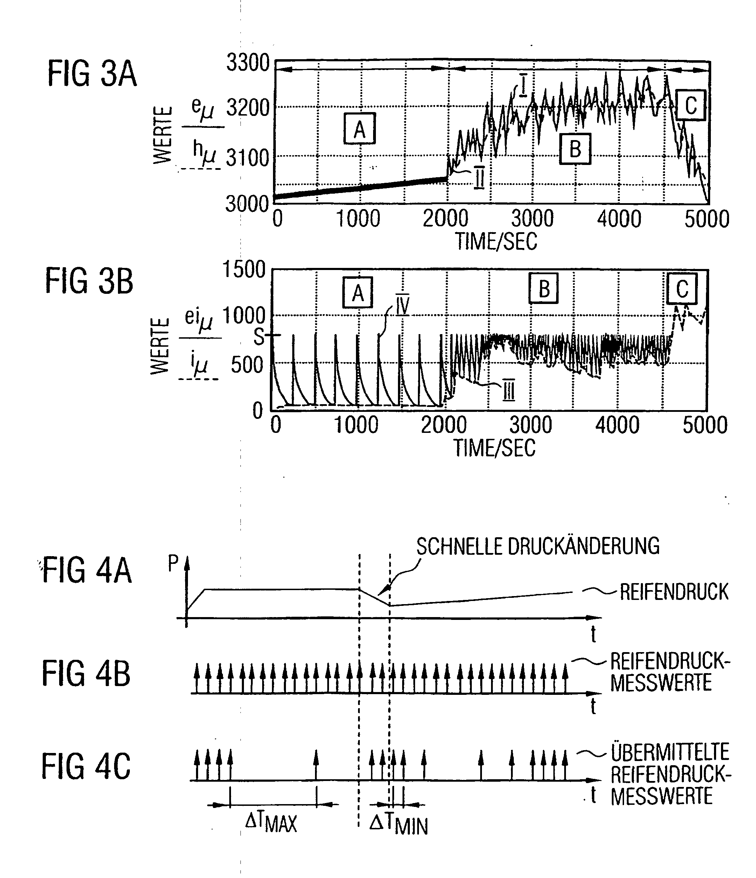

Im folgenden wird nun anhand der in den Figuren 3a-b dargestellten Diagramme erörtert, wie bei einem weiteren Ausführungsbeispiel des erfindungsgemäßen Verfahrens zum Überwachen eines Reifendrucks in einem Fahrzeugreifen die Häufigkeit der Übertragung von aktuellen Reifendruckmesswerten zu einer Empfangseinheit bestimmt wird.

Der Verlauf I in Figur 3a zeigt den Verlauf der erfassten Reifendruckmesswerte bei verschiedenen Fahrzeugzuständen A - C, wobei der Verlauf II den gemittelten bzw. tiefpassgefilterten Verlauf der erfassten Reifendruckmesswerte darstellt. Der Bereich A in dem Diagramm von Figur 3a beschreibt den Verlauf des Reifendrucks bei einem Fahrzeug, das beispielsweise in der Sonne parkt, wobei sich der Reifendruck des Fahrzeugreifens bedingt durch die geringe Änderung der Umgebungstemperatur nur langsam verändert. Der Bereich B stellt den Verlauf der Reifendruckmesswerte im Fahrzeugreifen während der Fahrt dar, wobei der temperaturbedingten Druckänderung hier ferner eine Druckänderung durch die Verformung des Reifens bei Kurvenfahrten oder durch das Überfahren von Unebenheiten überlagert ist. Der Bereich C stellt einen kontinuierlichen Druckverlust in dem Fahrzeugreifen beispielsweise aufgrund einer Beschädigung des Reifens dar.

In dem in Figur 3b dargestellten Diagramm stellt der Verlauf III die Standardabweichung der zeitlich aufeinander folgenden, erfassten Reifendruckmesswerte dar, wobei als Standardabweichung von Messwerten die durchschnittliche Abweichung der erfassten Messwerte von dem Mittelwert der Messwerte verstanden wird. Der Verlauf III, d. h. die Standardabweichung der erfassten Reifendruckmesswerte, stellt also bei dem in Figur 3b dargestellten Fall den von den erfassten Reifendruckmesswerten abgeleiteten reifendruckänderungsabhängigen Parameter dar.

Der Verlauf IV in Figur 3b stellt nun den Zählerstand eines Zählers dar, der beginnend bei einem Startwert dekrementiert wird, wobei in dem vorliegenden Fall der Zähler nicht linear zählt, sondern das Dekrement sich abhängig von dem Zählerstand ändert. Dies wird erreicht, in dem der Zähler durch die Anwendung einer nicht-linearen Funktion gewichtet wird. Eine nicht-lineare Funktion kann beispielsweise durch die Sprungantwort oder die Pulsantwort eines digitalen Filters, z. B. eines IIR-Filters (IIR = infinite impulse response) erzeugt werden.

Diese Variante ermöglicht eine stärkere Differenzierung des Übertragungsabstände, weil nicht nur der Schnittpunkt zwischen Zähler und Schwellwert höher liegt, sondern der Zählerstand zusätzlich auch noch schneller dekrementiert wird. Dies kann beispielsweise erreicht werden, indem man die Impulsantwort eines IIR-Digitalfilters verwendet, wenn die Grenzfrequenz des Filters proportional zur statistischen Größe gewählt wird.

Im folgenden wird nun anhand der Fig. 3a-b der Ablauf des erfindungsgemäßen Verfahrens zur Überwachung der Reifendruck in einem Fahrzeugreifen erläutert.

Mit jeder erfolgten Messung eines Reifdruckwertes wird der Zähler beginnend bei einem Startwert S dekrementiert, wobei der Zähler in dem vorliegenden Fall nicht-linear zählt. Daraus ergibt sich der exponentiell abfallende Verlauf IV in Fig. 3b. Erreicht nun der Wert des Zählers den reifendruckänderungsabhängigen Parameter, d. h. die Standardabweichung des Verlaufs des Reifendrucks, wird die Sendeeinheit aktiviert, um den aktuellen Reifendruckmesswert an die Empfangseinheit zu übermitteln. Wie aus dem Diagramm von Figur 3d ersichtlich ist, wird in dem Bereich A, der ein in der Sonne parkendes Fahrzeug simuliert, mit einer minimalen Häufigkeit eine Übertragung der Reifendruckmesswerte ausgelöst.

In dem Bereich D, bei dem der temperaturbedingten Druckänderung hier eine Druckänderung durch die Verformung des Reifens bei Kurvenfahrten oder des Überfahrens von Unebenheiten überlagert ist, reagiert das System mit einer entsprechend erhöhten Übertragungsrate. In dem Bereich C, der einen kontinuierlichen Druckverlust aufgrund einer Beschädigung des Fahrzeugreifens darstellt, werden kontinuierlich Daten, d. h. Reifendruckmesswerte an die Empfangseinheit übermittelt.

Vorteilhaft bei der Anwendung einer nicht-linearen Funktion durch den Zähler ist, wie in Figur 3b dargestellt, ausgehend von dem Startwert die ersten Dekremente des Zählers relativ groß sind, so dass ein hoher reifendruckänderungsabhängiger Parameter schnell erfasst werden kann. Falls jedoch ein niedriger reifendruckänderungsabhängiger Parameter vorliegt, können durch den exponentiellen Verlauf der nicht-linearen Funktion, die auf den Zähler angewendet wird, die Intervalle zwischen dem Auslösen einer Übertragung eines aktuellen Reifendruckmesswertes relativ lang ausgedehnt werden.

Anhand der Figuren 4a-c wird nun nochmals in zusammengefasster Form die prinzipielle Änderung des Zeitabstands und damit der Häufigkeit der Übertragung von zeitlich aufeinander folgenden Reifendruckmesswerten dargestellt.

Die Fig. 4a zeigt den Reifendruck über der Zeit. In der Figur 4b ist die kontinuierliche Erfassung der zeitlich aufeinander folgenden Reifendruckmesswerte dargestellt. Die Figur 4c zeigt nun mit welcher Häufigkeit die erfassten aktuellen Reifendruckmesswerte zu der Empfangseinheit übertragen, wobei im Bereich einer schnellen Druckänderung viele aktuelle Reifendruckmesswerte übertragen werden, und wobei immer weniger aktuelle Reifendruckmesswerte übertragen werden, je geringer die Reifendruckänderung ist. So stellt sich im Ruhezustand eine maximale Zeitperiode $\Delta T_{max}$ Übertragung zwischen denen ein, die sich ständig verkürzt, je größer die Druckänderungen werden, die sich durch die Fahrt mit unterschiedlicher Geschwindigkeit auf unterschiedlichen Fahrbahnen ergibt, wobei sich bei einer sehr schnellen Druckänderung beispielsweise durch eine Beschädigung des Reifens, die minimale Zeitperiode $\Delta T_{min}$ zwischen den Übertragungen ergibt.

Bei der vorliegenden Erfindung ist es ferner möglich, Temperaturwerte des Gasvolumens in dem Fahrzeugreifen zu verarbeiten. So kann beispielsweise der Quotient aus einem erfassten Reifendruckmesswert und einem Temperaturmesswert verarbeitet werden. Dies ist dahingehend vorteilhaft, da unter der Annahme, dass das Volumen des Reifens sich nicht signifikant verändert, sich bei allen durch Temperaturveränderungen bedingten Druckänderungen dieser Quotient nicht verändern sollte, wobei unter Berücksichtigung des "idealen Gasgesetzes" gilt: p*V/T= const., wobei p der Reifendruck, V das Reifenvolumen und T die Temperatur ist.

Dadurch kann eine durch Gasverlust oder Verformung des Reifens verursachte Druckänderung von einer überlagerten temperaturbedingten Änderung unterschieden werden. Daraus lässt sich insbesondere der Stillstand des Wagens ableiten, wobei in diesem Zustand die Übertragungshäufigkeit besonders drastisch reduziert werden kann. Betrachtet man außerdem den Mittelwert dieses Quotienten über einen Zeitraum, so dürfte dieser nahezu konstant sein, wenn nicht Gas aus dem Reifen entweicht. Dies stellt wiederum den wichtigsten zu erfassenden Zustand für einen Reifendrucksensor dar. Dabei ist zu beachten, dass die Temperaturmessung jedoch nicht jedes Mal durchgeführt werden muss, so dass das Zeitintervall für eine Temperaturmessung gegenüber einer Reifendruckmessung (z. B. bei $\Delta T_{min} \approx$ ls) verlängert sein kann, z. B. 8s. Die Batteriespannungsmessung kann in noch längeren Zeitabständen erfolgen, z. B. 64 Sekunden.

Ferner sollte bei der vorliegenden Erfindung beachtet werden, dass, wenn die Übermittlung eines aktuellen Reifendruckmesswertes ausgelöst wird, beliebige physikalische Parameter, wie Temperatur, Batteriespannung usw., und auch statistische Parameter, wie die Standardverteilung des Temperaturverlaufs usw.,

übermittelt werden können. Statistische Parameter sind ferner beispielsweise die Differenz zweier aufeinander folgender Messwerte, ein tiefpassgefilterter oder über die zurückliegenden Abtastwerte gemittelter Druckwert, statistische Größen die die Standardabweichung oder der Durchschnitt des Rauschens gegenüber einem der zuvor genannten Mittelwerte oder der Quotient Ausdruck und Temperatur der im Ruhezustand und im Mittelwert annähernd konstant sein sollte. Bekanntermaßen ist die Standardabweichung der Durchschnitt der quadrierten Differenzen zum Mittelwert. Als Durchschnitt des Rauschens wird im Zusammenhang der vorliegenden Erfindung der Durchschnitt der nicht quadrierten Absolutwerte der o.g. Differenz bezeichnet.

Es sollte ferner beachtet werden, dass es bei dem erfindungsgemäßen Verfahren zum Überwachen eines Reifendrucks in einem Fahrzeugreifen auch denkbar ist, die Reifendruckmesswerte nicht nur kontinuierlich zu erfassen, sondern dass das Zeitraster der Erfassung der Reifendruckmesswerte beispielsweise auch von den erfassten Reifendruckmesswerten abgeleitet werden kann. Dadurch ergibt sich eine weitere Verringerung der mittleren Leistungsaufnahme der Sensoranordnung zur Reifendrucküberwachung.

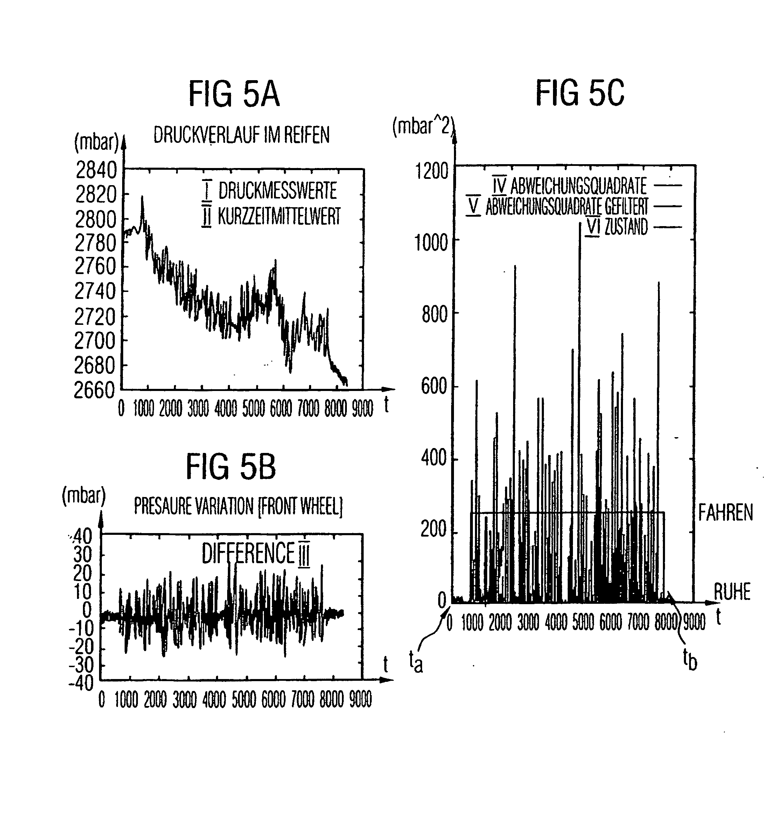

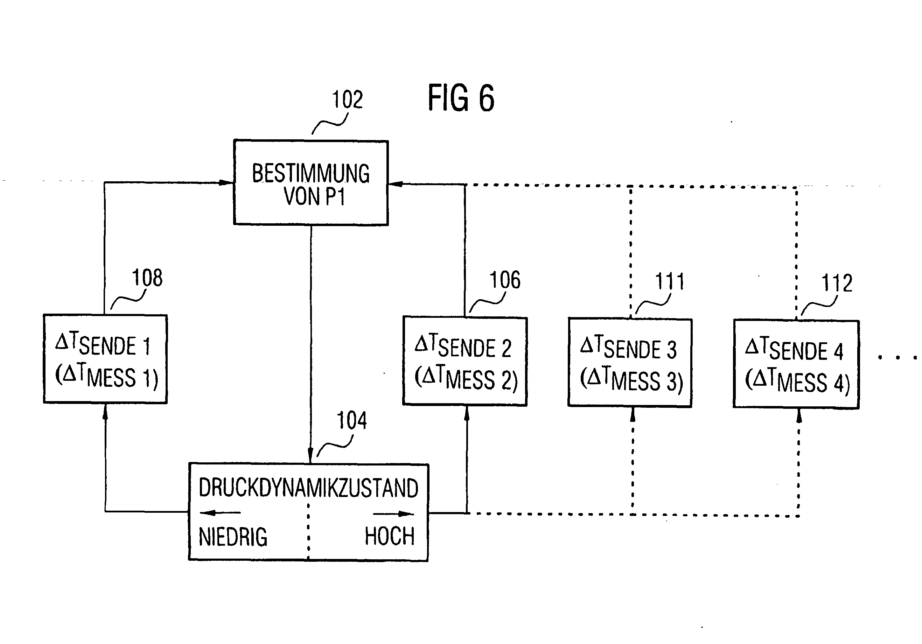

Im folgenden wird nun anhand der Fig. 5a-c und Fig. 6 die erfindungsgemäße Vorgehensweise erläutert, bei der aus einer Anzahl von vorangehenden Reifendruckmesswerten ein momentaner Druckdynamikzustand in einem Reifen eines Kraftfahrzeugs ermittelt und klassifiziert werden kann, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte abhängig von der ermittelten momentanen Druckdynamikzustand bzw. der Klassifizierung der ermittelten Druckdynamikzustände eingestellt wird.

Dabei kann der Druckdynamikzustand in dem Reifen des Fahrzeugs in verschiedene Klassen von Druckdynamikzuständen eingeteilt werden, die wiederum verschiedene Fahrsituationen des Fahrzeugs wiedergeben, wie einen Ruhezustand, z. B. Stillstand oder Parken, oder einen oder mehrere Fahrzustände des Fahrzeugs, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte durch eine Reifendruckmesseinrichtung während einer Fahrsituation mit einem niedrigen Druckdynamikzustand in dem Reifen des Fahrzeugs länger gewählt wird als während eines erfassten hohen Druckdynamikzustand in dem Reifen des Fahrzeugs, um während hoher Druckdynamikzustände in dem Reifen des Fahrzeugs eine in ausreichend kurzen Intervallen erfolgende Überwachung des Reifendrucks und damit des Reifenzustands zu ermöglichen.

Die Unterteilung der zeitlichen Abstände

$\Delta T_{sende}$ zwischen aufeinanderfolgenden Übertragungszeitpunkten in Abhängigkeit von den verschiedenen ermittelten momentanen Druckdynamikzuständen bzw. der Klassifizierung der Druckdynamikzustände in einem Reifen eines Fahrzeugs wird beispielsweise aus Sicherheitsgründen vorgenommen, da bei Fahrzuständen mit steigenden Reifenbelastungen und damit höheren Druckdynamikzuständen auch eine häufigere Überprüfung der Reifendruckwerte stattfinden sollte, um so frühzeitig wie möglich eine Beschädigung, einen Druckverlust, usw. des Fahrzeugreifen erkennen und dem Fahrzeugführer anzeigen zu können.

Bezüglich der folgenden Beschreibung sollte beachtet werden, dass der zeitliche Abstand zwischen aufeinanderfolgenden Übertragungszeitpunkten der Reifendruckmesswerte allgemein, d. h. ohne eine Bezugnahme auf die Druckdynamikzustände, mit $\Delta T_{sende}$ bezeichnet wird, wobei der eingestellte zeitliche Abstand bezugnehmend auf einen erfassten, niedrigen Druckdynamikzustand (bzw. keine Druckdynamik) in dem Reifen des Fahrzeugs mit $\Delta T_{sende1}$ und bezugnehmend auf einen erfassten, höheren Druckdynamikzustand in einem Reifen des Fahrzeugs mit $\Delta T_{sende2}$ bezeichnet wird.

Bezüglich der folgenden Beschreibung sollte ferner beachtet werden, dass das vorgestellte erfindungsgemäße Konzept gleichermaßen auf die geeignete Einstellung der zeitlichen Abstände $\Delta T_{mess}$ ($\Delta T_{mess1}$, $\Delta T_{mess2}$, ...) zwischen aufeinanderfolgenden Erfassungszeitpunkten der Reifendruckmesswerte angewendet werden kann.

Bei der im folgenden detailliert erläuterten, erfindungsgemäßen Vorgehensweise wird ausgenutzt, dass sich im Fahrbetrieb eines Fahrzeugs sogenannte "dynamische Lastumverteilungen" ergeben, die zu einer Veränderung des Reifendrucks in den Fahrzeugreifen führen, wobei hohe bzw. niedrige Änderungen des Druckverlaufs in einem Fahrzeugreifen einen erhöhten bzw. niedrigeren Druckdynamikzustand hervorrufen. So werden beispielsweise bei einer Kurvenfahrt des Fahrzeugs die äußeren Fahrzeugräder stärker belastet, so dass folglich auch der Reifendruck in diesen Fahrzeugreifen ansteigt, während der Reifendruck in den Fahrzeugreifen der kurveninneren, entlasteten Fahrzeugreifen sinkt. Vergleichbare dynamische Lastumverteilungen in einem Fahrzeug treten ferner beim Bremsen oder Beschleunigen des Fahrzeugs zwischen den Fahrzeugreifen der Hinterachse und der Vorderachse auf. So werden üblicherweise beim Abbremsen eines Fahrzeugs die Fahrzeugreifen der Vorderachse höher belastet, während bei Beschleunigungen des Fahrzeugs die angetriebene Achse(n) des Fahrzeugs stärker belastet werden, und damit der Reifendruck in diesen Fahrzeugreifen ansteigt. Weitere Reifendruckänderungen während des Fahrzeugbetriebs eines Kraftfahrzeugs treten beispielsweise beim Überfahren von Bodenunebenheiten auf.

Die während des Fahrbetriebs des Kraftfahrzeugs zu erwartenden Reifendruckänderungen in den Fahrzeugreifen weisen üblicherweise bedingt durch die Zeitdauer typischer Fahrsituationen, wie Kurvenfahrten, Beschleunigen, usw., eine Druckänderungsdynamik von wenigen Sekunden, d. h. einen hohen Druckdynamikzustand, auf. Derartige Reifendruckänderungen sind aber während des Stillstands bzw. Parkzustands des Fahrzeugs nicht zu erwarten, da der Reifendruck in einem intakten Fahrzeugreifen hier nur aufgrund von Temperaturänderungen schwankt und somit eine weit geringere Änderung der Druckdynamikzustände in einem Bereich von Minuten oder auch Stunden zeigt.

Im folgenden wird nun ausführlich erläutert, wie die während bestimmter Fahrsituationen des Fahrzeugs auftretenden Reifendruckänderungen bzw. Druckdynamikzustände in einem Fahrzugreifen ausgewertet und in bestimmte Klassen für die Druckdynamikzustände eingestuft werden können, so dass ohne die Verwendung eines Beschleunigungssensors oder eines andersartigen Rolldetektors eine Entscheidung getroffen werden kann, in welcher Fahrsituation sich das Fahrzeug gerade befindet.

Anhand des in Fig. 6 dargestellten Flussdiagramms 100 wird nun die erfindungsgemäße Vorgehensweise zur Ermittlung der momentanen Fahrsituation des Fahrzeugs dargestellt, um bei dem erfindungsgemäßen Verfahren zum Überwachen eines Reifendrucks in einem Fahrzeugreifen den zeitlichen Abstand ($\Delta T_{sende}$) zwischen aufeinanderfolgenden Übertragungszeitpunkten der Reifendruckmesswerte abhängig von der ermittelten Fahrsituation einstellen zu können.

Wie bereits oben angegeben ist, sollte ferner beachtet werden, dass das im folgenden vorgestellte erfindungsgemäße Konzept gleichermaßen auf die geeignete Einstellung der zeitlichen Abstände $\Delta T_{mess}$ zwischen aufeinanderfolgenden Erfassungszeitpunkten der Reifendruckmesswerte angewendet werden kann.

Wie in Schritt 102 des Flussdiagramms 100 dargestellt ist, wird zuerst ein Reifendruck-abhängiger Fahrsituationsparameter P1 ermittelt, indem ein erfasster Reifendruckmesswert bzw. eine Mehrzahl von aufeinanderfolgenden Reifendruckmesswerten ausgewertet wird.

Dazu wird der Reifendruck in den Fahrzeugreifen beispielsweise in Zeitabständen $\Delta T_{mess}$ gemessen, die kürzer oder gleich dem Zeitraum sind, der für eine Erkennung des Übergangs des Fahrzeugs zwischen einem Ruhezustand und einem Fahrzustand angestrebt wird. Die Messzeiten, d. h. die Zeitabstände zwischen aufeinanderfolgenden Erfassungszeitpunkten der Reifendruckmesswerte, können sich erfindungsgemäß im Fahrzustand des Fahrzeugs von den erfassten Reifendruckmesswerten während des Ruhezustands des Fahrzeugs unterscheiden, wobei jedoch im allgemeinen die vorangehende erfasste Fahrsituation des Fahrzeugs berücksichtigt wird.

Aus den aufeinanderfolgenden Reifendruckmessungen wird nun beispielsweise durch eine Filterung ein sogenannter Kurzzeitmittelwert des erfassten Reifendruckverlaufs gebildet. Fig. 5a zeigt beispielhaft einen ermittelten Reifendruckverlauf I in einem Fahrzeugreifen über der Zeit und die entsprechend ermittelten Kurzzeitmittelwerte (Verlauf II in Fig. 5a) des Reifendruckverlaufs I.

In Fig. 5a sind die Reifendruckmesswerte beispielhaft in einem zeitlichen Abstand $\Delta T_{mess}$ von 0,5 Sekunden gemessen worden, wobei in der Praxis Werte für den zeitlichen Abstand $\Delta T_{mess1}$ (bei einem niedrigen Druckdynamikzustand) beispielsweise in einem Bereich von 0,5 bis 120 Sekunden bevorzugt werden, und Werte für den zeitlichen Abstand $\Delta T_{mess2}$ (bei einem höheren Druckdynamikzustand) beispielsweise in einem Bereich von 0,1 bis 5 Sekunden bevorzugt werden. Die korrespondierenden zeitlichen Abstände für die Übermittlungszeitpunkte der ermittelten Reifendruckmesswerte liegen beispielsweise für geringe Druckdynamikzustände zwischen 15 und 120 Minuten und für hohe Druckdynamikzustände zwischen 5 und 60 Sekunden.

Der Kurzzeitmittelwert, wie er in Fig. 5a dargestellt ist, wurde beispielhaft mit einem IIR-Filter zweiter Ordnung berechnet, das die folgende Übertragungsfunktion aufweist:

$$H_{IIR1}(z)=\left(\frac{1-a}{1-a\cdot z^{-1}}\right)^2;$$

dabei stellt der Parameter a die Konstante dar, die die Grenzfrequenz des IIR-Filters zweiter Ordnung bestimmt.

Die Ausführungsform des verwendeten IIR-Filters kann beispielsweise mit dem IIR-Digitalfilter aus Kästchen 32 von Fig. 1 identisch sein, da in diesem Fall zur Mehrfachnutzung des IIR-Filters die gleiche Hardware-Anordnung verwendet werden kann. Eine Mehrfachnutzung könnte für den Fall interessant sein, wenn man die Entscheidung über die Sendezeitpunkte nach dem Verfahren von Fig. 1 dynamisch gestalten möchte, was den Vorteil des Erhalts der Korellation zwischen Druckerfassungsereignis und Übertragungszeitpunkt bietet, aber trotzdem unterschiedliche Messraten verwendet werden sollen.

Im folgenden wird nun bei jedem Reifendruckmesswert die Differenz der Reifendruckmesswerte zu dem Kurzzeitmittelwert der Reifendruckmessung bestimmt, wie dies beispielhaft in Fig. 5b anhand der Reifendruckschwankung als Verlauf III über der Zeit dargestellt ist. Es sollte beachtet werden, dass die Kurzzeitmittelwertbildung über eine beliebige Anzahl von vorangehend erfassten (vorzugsweise aufeinanderfolgenden) Reifendruckmesswerten vorgenommen werden kann, wobei es andererseits auch möglich ist, die Druckdifferenz direkt aus nur zwei aufeinanderfolgenden Reifendruckmesswerten zu gewinnen, ohne einen Kurzzeitmittelwert über mehrere voran gehende Reifendruckmesswerte zu bilden.

Anstelle der IIR-Tiefpass-Filterung und Differenzbildung zwischen Messwert und gefiltertem Wert, was letztendlich eine Hochpassfilterung zur Erzeugung der Differenzwerte darstellt, kann auch eine Bandpass-Filterung eingesetzt werden, wodurch nicht nur wie bei einem Hochpass die niederfrequenten Druckschwankungen aufgrund von Temperaturänderungen sondern auch Signalanteile, die für Fahrbewegungen zu hochfrequent sind, herausgefiltert werden.

Die Differenzwerte, wie sie in Fig. 5b dargestellt sind, werden nun beispielsweise quadriert, um die in Fig. 5c als Verlauf IV dargestellten Differenzquadrate (Abweichungsquadrate) der Reifendruckmesswerte zu erhalten. Anstelle der Differenzquadrate der Reifendruckmesswerte könnten aber auch einfach die Differenzbeträge der Reifendruckmesswerte im folgenden verwendet bzw. weiterverarbeitet werden.

Daraufhin werden die Quadrate der Differenzwerte der Reifendruckmesswerte wiederum mit einem IIR-Filter gefiltert, um einen Kurzzeitmittelwert der Abweichungsquadrate zu bestimmen, der einen bevorzugten Reifendruck-abhängigen Fahrsituationsparameter P1 gemäß dem erfindungsgemäßen Konzept darstellt. Das IIR-Filter, weist dabei folgendes Übertragungsverhalten auf:

$$H_{II2}(z)=\left(\frac{1-b}{1-b\cdot z^{-1}}\right)^2$$

wobei die Konstante b die Grenzfrequenz dieses Filters bestimmt. In Fig. 5c sind die gefilterten Abweichungsquadrate der quadrierten Differenzwerte der Druckmesswerte als Verlauf V in Fig. 5c dargestellt.

Bei dem durch das Bezugszeichen 104 dargestellten Verfahrensschritt in dem Flussdiagramm 100 wird nun der Reifendruckabhängige Funktionsparameter P1 mit einem ersten Vergleichsparameter, einer Vergleichsschwelle bzw. einem Vergleichswert PV1 verglichen, um zu entscheiden, ob hohe oder niedrige Druckdynamikzustände in dem Fahrzeugreifen vorliegen, d. h. in welcher Fahrsituation sich das Fahrzeug befindet. Dieser Vergleichsparameter PV1 wird beispielsweise über eine Mehrzahl von zurückliegenden, erfassten Reifendruckmesswerten ermittelt.

Ausgehend beispielsweise von einem Ruhezustand des Fahrzeugs wird der Reifendruck in den Fahrzeugreifen vorzugsweise in Zeitabständen $\Delta T_{mess}$ gemessen, die kürzer oder gleich dem Zeitraum sind, innerhalb dessen ein Übergang des Fahrzeugs zwischen einem Ruhezustand und einem Fahrzustand erkannt werden soll.

So wird nun von einer Klassifizierung für relativ niedrige Druckdynamikzustände, die beispielsweise einen Ruhezustand des Fahrzeugs wiedergeben, in eine Klassifizierung für relativ hohe Druckdynamikzustände, die beispielsweise einen Fahrzustand des Fahrzeugs wiedergeben, gewechselt, wenn innerhalb einer vorgegebenen Anzahl (1, 2, 3, ...) von zurückliegenden Messungen der Reifendruckmesswerte eine vorgegebene Anzahl (1, 2, 3, ...) von Überschreitungen des aktuellen Reifendruck-abhängigen Funktionsparameters P1, d. h. beispielsweise des aktuellen Differenzquadrats der Reifendruckmesswerte, über den ersten Vergleichsparameter PV1 auftritt, wobei der erste Vergleichsparameter vorzugsweise ein vorgegebenes, ganzzahliges Vielfaches des Kurzzeitmittelwerts der Differenzquadrate ist. Natürlich kann aber auch ein nicht-ganzzahliges Vielfaches des Kurzzeitmittelwerts der Differenzquadrate verwendet werden.

Im einfachsten Fall kann also bei bereits einer Überschreitung des ersten Vergleichsparameters PV1 durch den Reifendruckabhängigen Funktionsparameters P1 ein Wechsel der Klassifizierung des Druckdynamikzustands in dem Fahrzeugreifen vorgenommen werden.

Wenn von der Klassifizierung für relativ niedrige Druckdynamikzustände in die Klassifizierung für relativ hohe Druckdynamikzuständen gewechselt wird, werden die Reifendruckmesswerte mit einem verringerten zeitlichen Abstand $\Delta T_{sende2}$ ($\Delta T_{sende2} < \Delta T_{sende1}$) zwischen aufeinanderfolgenden Übertragungszeitpunkten der Reifendruckmesswerte übermittelt, wie dies in dem Flussdiagramm 100 durch das Kästchen 106 dargestellt ist.

Wenn nun dagegen innerhalb einer vorgegebenen Anzahl von Messungen (1, 2, 3, ...) genau eine oder eine vorgegebene Anzahl von Unterschreitungen des Reifendruck-abhängigen Fahrsituationsparameters P1, d. h. vorzugsweise des aktuellen Differenzquadrats der Reifendruckschwankungen, unter einen weiteren, zweiten Vergleichsparameter PV2 auftritt, wobei dies in Schritt 104 des Flussdiagramms 100 ermittelt wird, wird von der Klassifizierung für relativ hohe Druckdynamikzustände in die Klassifizierung für relativ niedrige Druckdynamikzuständen gewechselt. Der zweite Vergleichsparameter PV2 ist beispielsweise ein vorgegebener ganzzahliger Bruchteil des Kurzzeitmittelwerts der Differenzquadrate. Natürlich kann aber auch ein nicht-ganzzahliger Bruchteil des Kurzzeitmittelwerts der Differenzquadrate verwendet werden.

Bezüglich der Einstellung der zeitlichen Abstände zwischen aufeinanderfolgenden Übertragungszeitpunkten der Reifendruckmesswerte bedeutet dies, dass nun der zeitliche Abstand $\Delta T_{sende1}$ verwendet wird, wie dies in Kästchen 108 des Flussdiagramms 100 dargestellt ist, um die Reifendruckmesswerte in größeren zeitlichen Abständen $\Delta T_{sende1}$ zwischen aufeinanderfolgenden Zeitpunkten zu übermitteln.

Bezüglich des ersten und zweiten Vergleichsparameters sollte beachtet werden, dass diese auch identisch gewählt werden können, so dass beispielsweise eine feste Vergleichsschwelle zugrunde gelegt wird, deren Unterschreiten bzw. Überschreiten (in Schritt 104) bewertet wird, um die momentane Fahrsituation zu ermitteln.

Es sollte nun beachtet werden, dass der erste Vergleichsparameter PV1 durch einen Maximalwert $PV1_{max}$ einer Reifendruckänderung begrenzt sein kann, um dadurch sicherzustellen, dass hohe Druckabweichungen, die im Ruhezustand des Fahrzeugs nicht plausibel sind, immer zu einem Wechsel der Klassifizierung in eine Klassifizierung für hohe Druckdynamikzustände und damit zu einer häufigeren Überwachung des Reifendrucks führen. Dies ist erforderlich, da bei einer großen Anzahl von aufeinanderfolgenden hohen Druckabweichungen auch der Kurzzeitmittelwert der Druckabweichungen sehr hoch ansteigt, so dass das Vielfache der Kurzzeitmittelwerte, die den ersten Vergleichsparameter PV1 bilden erst sehr spät (wenn überhaupt) überschritten wird. Damit soll sichergestellt werden, dass bei dem Überschreiten eines Maximalwerts $PV1_{max}$ einer Reifendruckänderung automatisch der zeitliche Abstand zwischen aufeinanderfolgenden Erfassungszeitpunkten der Reifendruckmesswerte verringert wird, um eine sichere Überwachung der Reifendruckmesswerte in kurzen Erfassungsintervallen zu gewährleisten.

Ferner sollte beachtet werden, dass der erste Vergleichsparameter PV1 zur Beurteilung des Reifendruck-abhängigen Fahrsituationsparameters P1 auch durch einen Minimalwert $PV1_{min}$ begrenzt sein kann, um sicherzustellen, dass Reifendruckabweichungen, die keinen eindeutige Klassifizierung der Druckdynamikzustände kennzeichnen, nicht zu einem unnötigen Wechsel der Klassifizierung in eine Klassifizierung für hohe Druckdynamikzustände und damit zu einer unnötigen Belastung der Batterie des Reifendrucküberwachungssystems führen. Die Verwendung des Minimalwerts $PV1_{min}$ für den ersten Vergleichsparameter PV1 wird vorzugsweise eingesetzt, um sicherzustellen, dass nach einer großen Anzahl von aufeinanderfolgenden sehr niedrigen Reifendruckänderungen nicht bereits eine minimale Änderung des Reifendrucks, die aber ein Vielfaches des durch die vorangegangenen Messwerte mit geringer Änderung abgesenkten Kurzzeitmittelwerts betragen kann, zu einem Überschreiten eines äußerst niedrigen ersten Vergleichsparameters PV1 und damit zu einer nicht erforderlichen Änderung der Klassifizierung in eine Klassifizierung für hohe Druckdynamikzustände (zu einer Einstufung in einen Fahrzustand des Fahrzeugs) führt.

Ferner sollte beachtet werden, dass der zweite Vergleichsparameter PV2 durch einen Maximalwert $PV2_{max}$ begrenzt werden kann, um sicherzustellen, dass nach hohen Druckabweichungswerten während eines ruhigeren Fahrzustands des Fahrzeuge nicht fälschlicherweise die Klassifizierung in eine Klassifizierung für niedrige Druckdynamikzustände gewechselt wird.

Ferner wird vorzugsweise auch ein Minimalwert $PV2_{min}$ für den zweiten Vergleichsparameter PV2 vorgesehen, um dadurch sicherzustellen, dass über eine lange Zeitdauer für den Fahrzustand unplausibel kleine Druckabweichungen in jedem Fall zu einem Wechsel in eine Klassifizierung für niedrige Druckdynamikzustände (Wechsel in den Ruhezustand des Fahrzeugs) führen.

Es sollte beachtet werden, dass durch eine Staffelung der Vielfachen und Bruchteile, die als Schaltgrenzen zum Bestimmen der Fahrsituation des Fahrzeugs definiert sind, zusätzliche Zustände definiert werden können, d. h. beispielsweise Stillstand, Fahren mit geringer Dynamik, Fahren mit hoher Dynamik, Alarmzustand usw. Dies ist beispielsweise durch die zusätzlichen Kästchen 110, 112 usw. des Flussdiagramms 100 dargestellt, mittels derer entsprechend der ermittelten Fahrsituation verschiedene zeitliche Abstände $\Delta T_{mess3}$, $\Delta T_{mess4}$ usw. zwischen aufeinanderfolgenden Erfassungszeitpunkten der Reifendruckmesswerte eingestellt werden können, um je nach Fahrsituation und Fahrdynamik eine zuverlässige Erfassung der Reifendruckmesswerte zu gewährleisten. Eine höhere Fahrdynamik bedeutet im allgemeinen eine höhere Belastung für die Reifen und auch eine schnellere zeitliche Änderung der Belastungszustände für die Reifen und damit auch der Druckdynamikzustände. So sollte bei einer erhöhten Belastung der Reifen auch der zeitliche Abstand der Übertragungszeitpunkte der reifenspezifischen Parameter reduziert werden, wobei erfindungsgemäß gilt:

$$\Delta T_{sende1} > \Delta T_{sende2} > \Delta T_{sende3} > \Delta T_{sende4} \cdots$$

Entsprechend kann bei einer erhöhten Belastung der Reifen auch der zeitliche Abstand der Erfassungszeitpunkte der reifenspezifischen Parameter reduziert werden, wie dies im folgenden noch erläutert wird, wobei dann erfindungsgemäß optional gilt:

$$\Delta T_{mess1} > \Delta T_{mess2} > \Delta T_{mess3} > \Delta T_{mess4} \cdots$$

In Fig. 5c ist beispielhaft eine mögliche Zuordnung der ermittelten Reifendruckmesswerte zu verschiedenen Klassifizierungen für die Druckdynamikzustände und damit zu verschiedenen Fahrsituationen eines Kraftfahrzeugs dargestellt. Wie in Fig. 5c dargestellt ist, ist das Fahrzeug zunächst geparkt (vgl. Verlauf VI in Fig. 5c), wobei zu dem Zeitpunkt $t_a$ das Fahrzeug zu fahren beginnt. Dies führt zu einem Wechsel der Klassifizierung der Druckdynamikzustände und damit zu einem Zustandswechsel der ermittelten Fahrsituation, d. h. zu einer Änderung des zeitlichen Abstands $\Delta T_{sende}$ von $\Delta T_{sende1}$ in $\Delta T_{sende2}$ zwischen aufeinanderfolgenden Übertragungszeitpunkten der Reifendruckmesswerte, nachdem die Differenzquadrate dreimal in Folge das Achtfache ihres Mittelwerts überschritten haben. Dieses (rein beispielhaft gewählte) Kriterium für den Reifendruck-abhängigen Fahrsituationsparameter P1 und den ersten und zweiten Vergleichsparameter PV1, PV2, führt zu einem Wechsel der Klassifizierung und damit der erfassten Fahrsituation in die Klassifizierung für hohe Druckdynamikzustände (den Fahrzustand). Die Obergrenze für den Maximalwert des Kurzzeitmittelwerts $PV1_{max}$, der noch im Kriterium berücksichtigt wird, liegt bei einem Wert von 8, d. h. das Achtfache des Kurzzeitmittelwerts entspricht also einem Wert von 64 für das Abweichungsquadrat.

Wie in Fig. 5c dargestellt ist, fährt das Fahrzeug etwa zwei Stunden (vgl. Verlauf VI in Fig. 5c), wobei das Fahrzeug kurz vor dem Zeitpunkt $t_b$ wieder geparkt wird. Dies führt wiederum zu einem Klassifizierungswechsel, nachdem die Differenzquadrate 256 mal in Folge ihren Mittelwert unterschritten haben. Dieses wiederum rein beispielhaft gewählte Kriterium führt zu einen Klassifizierungswechsel in die Klassifikation für niedrige Druckdynamikzustände (Ruhezustand), so dass der zeitliche Abstand zwischen aufeinanderfolgenden Übertragungszeitpunkten der Reifendruckmesswerte wieder auf das Zeitintervall $\Delta T_{sende1}$ eingestellt wird. Eine Untergrenze für den Minimalwert des Kurzzeitmittelwerts, der im Kriterium noch Berücksichtigung findet, wurde bei dem in Fig. 5c dargestellten Ausführungsbeispiel auf einen Wert von 32 eingestellt.

Es sollte beachtet werden, dass das Mittelwertfilter (IIR-Filter) für die Differenzquadrate mit dem Wechsel in die Klassifizierung für niedrige Druckdynamikzustände vorzugsweise wieder auf einen Startwert zurückgesetzt wird, der das Rauschen des Reifendrucksensors und der für die Messung verwendeten Elektronik repräsentiert. Dies ist erforderlich, um zu vermeiden, dass bei einem erneuten Anfahren des Fahrzeugs das Reifendrucküberwachungssystem aufgrund des immer noch hohen Kurzzeitmittelwerts der Differenzquadrate unnötig lange in einer Klassifizierung für niedrige Druckdynamikzustände verbleibt.

Zusätzlich oder alternativ zu der geeigneten Einstellung des zeitlichen Abstands zwischen aufeinanderfolgenden Übertragungen der aktuellen Reifendruckmessergebnisse eines Reifendrucksensors oder anderer Reifenzustandsparameter ist es mit der vorliegenden Erfindung ferner möglich, entsprechend des jeweils ermittelten Druckdynamikzustands oder der jeweiligen Klassifizierung der Druckdynamikzustände eine momentane Fahrsituation des Fahrzeugs zu ermitteln.

Abhängig von der ermittelten momentanen Fahrsituation des Fahrzeugs kann nun erfindungsgemäß ferner der zeitliche Abstand $\Delta T_{mess}$ ($\Delta T_{mess1}$, $\Delta T_{mess2}$, ...) zwischen aufeinanderfolgenden Erfassungszeitpunkten der Reifendruckmesswerte, die durch die Reifendruckmesseinrichtung erfasst werden, entsprechend eingestellt werden. Dabei wird vorzugsweise bei einer Klassifizierung für niedrigere Druckdynamikzustände in dem Reifen des Fahrzeugs der zeitliche Abstand zwischen aufeinanderfolgenden Erfassungszeitpunkten länger gewählt als der zeitliche Abstand zwischen aufeinanderfolgenden Erfassungszeitpunkten bei einer Klassifizierung für höhere Druckdynamikzustände in dem Reifen des Fahrzeugs. Diese Vorgehensweise eröffnet vorteilhafterweise ein weiteres Energieeinsparpotential und damit eine mögliche weitere Erhöhung der Lebensdauer der erfindungsgemäßen Reifendrucküberwachungsanordnung.

Wie nun in dem Flussdiagramm 100 in dem Kästchen 102 dargestellt ist, werden die aktuellen Reifendruckmesswerte zu den jeweils eingestellten zeitlichen Abständen $\Delta T_{mess1}$ oder $\Delta T_{mess2}$ erfasst und daraus der Reifendruck-abhängige Fahrsituationsparameter P1 ermittelt.

Bezüglich des vorliegenden erfindungsgemäßen Konzepts zur Überwachung eines Reifendrucks in einem Fahrzeugreifen kann ferner noch auf das Nyquist-Theorem (auch als Shannon-Theorem bekannt) verwiesen werden, wobei gilt:

$$F_s \geq 2*F_b,$$

wobei $F_s$ die Abtastfrequenz (Nyquist-Frequenz) und $F_b$ die Frequenz des abzutastenden Signals darstellt. Es wird deutlich, dass die Abtastfrequenz wenigstens doppelt so groß sein sollte, wie die Bandbreite des abgetasteten Signals (z. B. die Änderungsrate des Druckverlaufs in einem Fahrzeugreifen). Weiß man also, dass es einen Zustand geringer Druckdynamik in dem Fahrzeugreifen gibt, bei dem sich Druckänderungen bedingt durch Änderungen der Umgebungstemperatur nur im Minuten oder Stundenbereich ergeben, so kann man natürlich in diesem Zustand weniger Messwerte durch Messungen in größeren zeitlichen Abständen aufnehmen, als es in einem anderen Zustand höherer Druckdynamik, bei dem sich Druckänderungen aus Laständerungen durch Fahrsituationen im Sekundenbereich in dem Fahrzeugreifen ergeben, erforderlich ist.

Es sollte beachtet werden, dass abhängig von den Gegebenheiten das erfindungsgemäße Reifendrucküberwachungsverfahren in Hardware, beispielsweise durch eine Hardware-Statemachine, oder in Software implementiert werden kann. Die Implementation kann auf einem digitalen Speichermedium, insbesondere einem Flash-Speicher, einem EEPROM-Speicher (EEPROM = electrically erasable programmable read-only memory = elektrisch löschbarer Nur-LeseSpeicher) oder einem ROM-Speicher (ROM = read-only memory) oder auch einer Diskette oder CD (CD = Compact Disk) mit elektronisch auslesbaren Steuersignalen erfolgen, die so mit einem programmierbaren Computersystem, vorzugsweise einer Mikrokontrollereinrichtung, zusammenwirken können, dass das erfindungsgemäße Reifendrucküberwachungsverfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

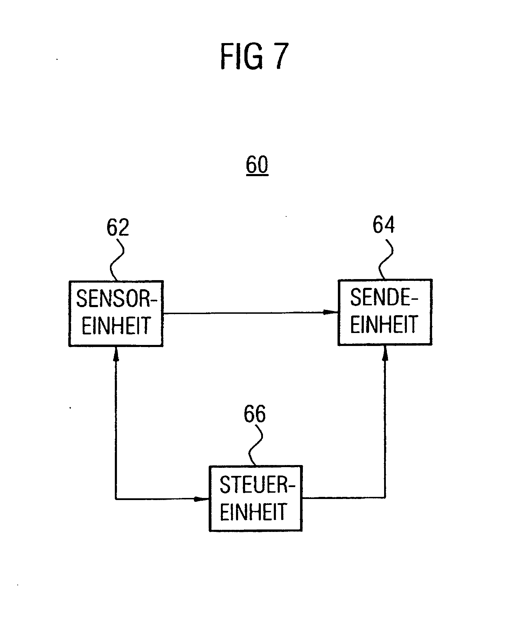

In Fig. 7 ist die erfindungsgemäße Vorrichtung 60 zum Überwachen eines Referenzdruckes in einem Reifen eines Fahrzeugs dargestellt. Die Vorrichtung umfasst eine Druckmesseinrichtung 62 zum Erfassen zeitlich aufeinander folgender Reifenmesswerte, eine Sendeeinheit 64 zum Übertragen zumindest eines Teils der Reifendruckmesswerte zu einer Empfangseinheit, und eine Steuereinheit 66 zum Steuern der Häufigkeit der Übertragung der Reifendruckmesswerte durch die Sendeeinheit in Abhängigkeit von den erfassten Reifendruckwerten und/oder optional zum Steuern der Häufigkeit der Erfassung der Reifendruckmesswerte durch die Druckmesseinrichtung 62 in Abhängigkeit von den erfassten Reifendruckwerten.

Die Steuereinheit 66 oder auch die Druckmesseinrichtung 62 selbst kann aus einer Mehrzahl von vorangehenden Reifendruckmesswerten einen momentanen Druckdynamikzustand bzw. eine Klassifizierung für die Druckdynamikzustände in einem Reifen des Fahrzeugs ermitteln, wobei der zeitliche Abstand $\Delta T_{sende}$ zwischen aufeinanderfolgenden Übertragungszeitpunkten der Reifendruckmesswerte und/oder auch der zeitliche Abstand $\Delta T_{mess}$ zwischen aufeinanderfolgenden Erfassungszeitpunkten der Reifendruckmesswerte abhängig von den ermittelten momentanen Druckdynamikzuständen und damit von der Fahrsituation eingestellt werden kann.

Die erfindungsgemäße Vorrichtung 60 zur Überwachung des Reifendrucks ist dabei vorzugsweise in der Felgeninnenseite eines Fahrzeugrades angeordnet, so dass die Vorrichtung die erforderlichen, zu erfassenden physikalischen Größen, wie z. B. Druck und Temperatur, der Gasfüllung eines Fahrzeugreifens detektieren kann.

Zusammenfassend kann also festgestellt werden, dass durch das erfindungsgemäße Verfahren und die erfindungsgemäße Vorrichtung zum Überwachen eines Reifendrucks in einem Fahrzeugreifen ein Drucksensor-IC eingesetzt werden kann, dessen Leistungsverbrauch so gering ist, dass über die angestrebte Lebensdauer des Systems eine kontinuierliche Messung von Druck und Temperatur mit einer festen Messrate erfolgen kann. Diese Messrate wird durch den Zeitabstand festgelegt, in dem eine Änderung des Reifendrucks spätestens erkannt werden soll. Der Hauptleistungsverbrauch in einem derartigen Reifendrucksensorsystem wird dann durch die Sendeeinrichtung bestimmt, die zur Übertragung von aktuellen Reifendruckmesswerten an eine Gegenstelle dient, die die weitere Verarbeitung der Reifendruckmesswerte übernimmt. Die mittlere Leistungsaufnahme des Systems lässt sich also über die Einschalthäufigkeit der Sendeeinheit steuern. Im Gegensatz zu den im Stand der Technik gebräuchlichen Systemen, bei denen die Messhäufigkeit und die Übertragungshäufigkeit von dem über einen zusätzlich angeordneten Beschleunigungssensor oder einen Bewegungsschalter erfassten Fahrzustand abhängt, kann das erfindungsgemäße System den Verlauf des Reifendrucks auswerten und basierend auf diesen Messdaten entscheiden, welche Aktualisierungsrate zur Übermittlung aktueller Reifendruckmesswerte erforderlich ist und/oder welche Erfassungsrate zur Ermittlung aktueller Reifendruckmesswerte erforderlich ist.

Durch das erfindungsgemäße Konzept zum Überwachen eines Reifendruck in einem Reifen eines Fahrzeuges ergeben sich also eine Reihe von Vorteilen.

So können mit batteriebetriebenen Reifendrucksensoranordnungen die erforderlichen Messungen des Reifendrucks über die gesamte angestrebte Lebensdauer, die in der Größenordnung von zehn Jahren liegt, einer Reifendrucksensoranordnung gewährleistet werden, da sich die Reifendrucksensoranordnung in einem Energiesparbetrieb (power saving operation) befindet, so dass die Leistungsaufnahme der Anordnung äußerst gering ist, solange keine kritische Veränderung des Reifendrucks auftritt. Wenn jedoch eine kritische Veränderung des Reifendrucks auftritt, die auf einen Gasverlust bzw. auf eine Beschädigung des Reifens hinweist, wird ein möglichst kurzer Zeitabstand zwischen den übermittelten aktuellen Reifendruckmesswerten verwendet, um äußerst zuverlässig und sehr schnell Änderungen des Reifendrucks erkennen zu können, diese auszuwerten und, wenn erforderlich, diese dem Fahrzeugführer anzuzeigen.

Ferner wird erfindungsgemäß ermöglicht, dass die zeitlichen Abstände $\Delta T_{sende}$ zwischen aufeinanderfolgenden Übertragungszeitpunkten und/oder auch die zeitlichen Abstände $\Delta T_{mess}$ zwischen aufeinanderfolgenden Erfassungszeitpunkten der Reifendruckmesswerte, der Temperatur oder weiterer reifenspezifischer Parameter in Abhängigkeit von dem momentan ermittelten Fahrdynamikzustand in einem Reifen des Fahrzeugs verändert werden können, um aus Sicherheitsgründen bei Fahrzuständen mit steigenden Reifenbelastungen auch eine häufigere Überprüfung der reifenspezifischen Parameter stattfinden zu lassen, um so frühzeitig wie möglich eine Beschädigung, einen Druckverlust, usw. des Fahrzeugreifen erkennen und dies dem Fahrzeugführer anzeigen zu können.

Da bei der vorliegenden Erfindung ferner ein aus den erfassten Reifendruckmesswerten abgeleiteter reifendruckänderungsabhängiger Parameter verwendet wird, aus dem auf die physikalischen Zustandsparameter, d. h. auf den Druck im Reifen abhängig von dem Fahrzustand des Fahrzeugs geschlossen werden kann, ist bei der vorliegenden Erfindung kein zusätzlicher Beschleunigungssensor oder Bewegungsschalter zur Erfassung des Fahrzustands des Fahrzeugs erforderlich, dessen Auswertung einerseits einen zusätzlichen schaltungstechnischen Aufwand bedeutet, und damit andererseits den Stromverbrauch, d. h. die Leistungsaufnahme, der Reifendrucksensoranordnung erhöhen würde.

Bei der vorliegenden Erfindung wird ferner ermöglicht, dass die aktuellen Reifendruckmesswerte (und auch andere ausgewertete Daten) regelmäßig mit einer vorgegebenen Mindesthäufigkeit, z. B. stündlich, an eine Zentraleinheit im Fahrzeug, z. B. den Bordcomputer, übertragen werden, um der Zentraleinheit die Überwachung der Funktionstüchtigkeit der Reifendrucksensoranordnung zu ermöglichen. Andererseits ermöglicht die vorliegende Erfindung, dass Druckänderungen äußerst frühzeitig an die Zentraleinheit übermittelt werden, so dass Beschädigungen des Reifens frühestmöglich erkannt werden können.

Ferner ermöglicht die vorliegende Erfindung, dass zusätzlich zu dem aktuellen Reifendruckmesswert weitere Informationen zu der Zentraleinheit übermittelt werden können, die dann sinnvoll ausgewertet werden können, wenn der Reifendruck in einem bekannten, z. B. konstanten, Zeitabstand erfasst wird. Diese zusätzlichen Informationen sind beispielsweise tiefpassgefilterte Druckwerte oder gleitende Mittelwerte der erfassten Reifendruckmesswerte, die Abweichung der Messung des Reifendruckmesswertes vom Vorgängerwert oder einem tiefpassgefilterten oder gemittelten Wert, oder beispielsweise statistische Werte auf der Grundlage der erfassten Reifendruckmesswerte, wie z. B. Maßzahlen für Gradienten oder Varianzen der Messwerte über einen bestimmten Beobachtungszeitraum.

Diese zusätzlichen Daten können beispielsweise dabei eingesetzt werden, eine exakte Beurteilung des Reifenzustands über eine längere Zeitperiode vorzunehmen.

Bezugszeichenliste

| 10 | Flußdiagramm |
|---|---|
| 12 - 54 | Verfahrensschritte |
| 60 | Vorrichtung zum Überwachen des Reifendrucks |
| 62 | Druckmeßeinrichtung |
| 64 | Sendeeinheit |
| 66 | Steuereinheit |
| 100 | Flußdiagramm |
| 102 - 110 | Verfahrensschritte |

**Patentansprüche**

1. Verfahren zum Überwachen eines Reifendrucks in einem Reifen eines Fahrzeugs, bei dem Reifendruckmesswerte an aufeinander folgenden Messzeitpunkten ($T_{MESS}$) durch eine Druckmesseinrichtung erfasst werden und von einer Sendeeinheit die Reifendruckmesswerte an aufeinander folgenden Übertragungszeitpunkten

($T_{SENDE}$) zu einer Empfangseinheit übertragen werden, wobei der Abstand ($\Delta T_{mess}$) zwischen aufeinander folgenden Messzeitpunkten und/oder der Abstand ($\Delta T_{sende}$) zwischen aufeinander folgenden Übertragungszeitpunkten einstellbar ist und aus den erfassten Reifendruckmesswerten abgeleitet wird, mit folgenden Schritten:

Erfassen einer Mehrzahl von Reifendruckmesswerten; **gekennzeichnet durch**

Ermitteln eines momentanen Druckdynamikzustands in dem Reifen, der infolge der momentanen Fahrsituation des Fahrzeugs auftritt, aus der Mehrzahl von Reifendruckmesswerten, mit folgenden Unterschritten:

Auswerten (100) einer Mehrzahl von auf- einanderfolgenden Reifendruckmesswer- ten, um einen Reifendruck-abhängigen Fahrsituationsparameter (P1) zu erhalten;

Vergleichen (104) des Reifendruck-abhängigen Fahrsituationsparameters mit einem Vergleichsparameter (PV1; PV2); und

Ermitteln des momentanen Druckdynamikzustands aus dem Vergleich;

Einstellen der Messzeitpunkte ($T_{mess}$) oder der Übertragungszeitpunkte ($T_{sende}$) entsprechend des ermittelten, momentanen Druckdynamikzustands.

2. Verfahren nach Anspruch 1, bei dem die unter- schiedlichen Druckdynamikzustände in unter- schiedliche Klassen eingeteilt werden.

3. Verfahren nach Anspruch 2, bei dem die Übergänge zwischen den unterschiedlichen Klassen der Druckdynamikzustände aus den ermittelten Reifendruckmesswerten abgeleitet werden.

4. Verfahren nach einem der vorhergehenden Ansprüche, bei dem die Häufigkeit der Übertragung abhängig von den ermittelten Druckdynamikzuständen eingestellt wird, indem unterschiedliche Zeitabstän- de ($\Delta T_{sende}$) zwischen den Übertragungen eingestellt werden.

5. Verfahren nach einem der vorhergehenden Ansprüche, bei dem der zeitliche Abstand ($\Delta T_{mess}$) zwi- schen aufeinander folgenden Erfassungszeitpunk- ten der Reifendruckmesswerte abhängig von den unterschiedlichen Druckdynamikzuständen eingestellt wird.

6. Verfahren nach Anspruch 5, bei dem der zeitliche

Abstand ($\Delta T_{mess}$) zwischen aufeinanderfolgenden Erfassungszeitpunkten kleiner oder gleich als das Zeitintervall ist, während dessen ein Übergang zwischen unterschiedlichen Druckdynamikzuständen erkannt werden soll.

7. Verfahren nach einem der Ansprüche 1 bis 4, bei dem die Erfassung der Reifendruckmesswerte in festen zeitlichen Abständen erfolgt.

8. Verfahren nach einen der vorhergehenden Ansprüche, bei dem der von den erfassten Reifendruckmesswerten abgeleitete Parameter durch eine Hochpass- oder Bandpassfilterung der Reifendruckmesswerte gewonnen wird.

9. Verfahren nach Anspruch 8, bei dem der Hochpass- oder Bandpass-gefilterte Wert quadriert wird, um den der von den erfassten Reifendruckmesswerten abgeleiteten Parameter zu erhalten.

10. Verfahren nach Anspruch 8, bei dem der Betrag des Hochpass- oder Bandpass-gefilterten Werts gebildet wird, um den von den erfassten Reifendruckmesswerten abgeleiteten Parameter zu erhalten.

11. Verfahren nach einem der vorhergehenden Ansprüche, bei dem die Druckdynamikzustände in dem Fahrzeugsreifen in eine Mehrzahl von Klassen von Druckdynamikzuständen unterteilbar sind, wobei abhängig von der Klasse der zeitliche Abstand ($\Delta T_{sende}$) zwischen aufeinanderfolgenden Übertragungszeitpunkten der Reifendruckmesswerte verändert wird.

12. Verfahren nach Anspruch 11, bei dem der zeitliche Abstand ($\Delta T_{sende}$) zwischen aufeinanderfolgenden Übertragungszeitpunkten kleiner oder gleich als das Zeitintervall ist, während dessen ein Übergang zwischen unterschiedlichen Klassen der Druckdynamikzustände erkannt werden soll.

13. Verfahren nach Anspruch 11 oder 12, das ferner mit folgende Schritte aufweist:

Auswerten (100) einer Mehrzahl von aufeinan- derfolgenden Reifendruckmesswerten, um ei- nen Reifendruck-abhängigen Fahrsituations- parameter (P1) zu erhalten;

Vergleichen (104) des Reifendruck-abhängi- gen Fahrsituationsparameters mit einem er- sten Vergleichsparameter (PV1) und einem zweiten Vergleichsparameter (PV2); und

Einstellen (106; 110) des zeitlichen Abstands ($\Delta T_{Sende1}$) zwischen aufeinanderfolgenden Übertragungszeitpunkten der Reifendruckmesswerte für eine erste Klasse der Druckdynamikzustände, wenn eine Überschreitung des ersten Vergleichsparameters (PV1) auftritt; und

Einstellen (108) des zeitlichen Abstands ($\Delta T_{Sende2}$) zwischen aufeinanderfolgenden Übertragungszeitpunkten der Reifendruckmesswerte für eine zweite Klasse von Druckdynamikzuständen, wenn eine Unterschreitung des zweiten Vergleichsparameters (PV2) auftritt.

14. Verfahren nach Anspruch 13, bei dem der erste und zweite Vergleichsparameter (PV1, PV2) aus einer Mehrzahl von zurückliegenden Reifendruckmesswerten ermittelt wird.

15. Verfahren nach Anspruch 13 oder 14, bei dem der erste und zweite Vergleichsparameter (PV1, PV2) miteinander übereinstimmen.

16. Verfahren nach einem der Ansprüche 13 bis 15, bei dem die erste Klasse der Druckdynamikzustände einen Fahrzustand des Fahrzeugs und die zweite Klasse der Druckdynamikzustände einen Ruhezustand des Fahrzeugs darstellt.

17. Computer-Programm mit einem Programmcode zur Durchführung des Verfahrens zur Überwachung des Reifendrucks in einem Fahrzeugreifen nach einem der vorhergehenden Ansprüche, wenn das Computer-programm auf einem Computer abläuft.

18. Vorrichtung zum Überwachen eines Reifendrucks in einem Reifen eines Fahrzeugs, bei der Reifendruckmesswerte an aufeinanderfolgenden Messzeitpunkten ($T_{MESS}$) durch eine Druckmesseinrichtung erfassbar sind und von einer Sendeeinheit die Reifendruckmesswerte an aufeinanderfolgenden Übertragungszeitpunkten ($T_{SENDE}$) zu einer Empfangseinheit übertragbar sind, wobei der Abstand ($\Delta T_{mess}$) zwischen aufeinander folgenden Messzeitpunkten und/oder der Abstand ($\Delta T_{sende}$) zwischen aufeinander folgenden Übertragungszeitpunkten einstellbar ist und aus den erfassten Reifendruckmesswerten ableitbar ist, mit folgenden Merkmalen:

einer Reifendruckmesseinrichtung zum Erfassen einer Mehrzahl von Reifendruckmesswerten;

einer Sendeeinheit zum Übertragen der Reifendruckmesswerte zu einer Empfangseinheit; **gekennzeichnet durch**

eine Steuereinrichtung zum Ermitteln eines momentanen Druckdynamikzustands in dem Reifen, der infolge der momentanen Fahrsituation auftritt, aus der Mehrzahl von Reifendruckmesswerten, die ferner folgende Merkmale aufweist:

eine Einrichtung zum Auswerten (100) einer Mehrzahl von aufeinanderfolgenden Reifendruckmesswerten, um einen Reifendruck-abhängigen Fahrsituationsparameter (P1) zu erhalten;

eine Einrichtung zum Vergleichen (104) des Reifendruckabhängigen Fahrsituationsparameters mit einem Vergleichsparameter (PV1; PV2); und

eine Einrichtung zum Ermitteln des momentanen Druckdynamikzustands aus dem Vergleich;

einer Einrichtung zum Einstellen der Messzeitpunkte oder der Sendezeitpunkte entsprechend des ermittelten, momentanen Druckdynamikzustands.

## Claims

1. A method of monitoring tire pressure in a tire of a vehicle, wherein tire pressure measured values are detected by a pressure measuring means at successive measuring time instants ($T_{MEAS}$), and the tire pressure measured values are transmitted from a transmitting unit to a receiving unit at successive transmission time instants ($T_{TRANS}$), wherein the distance ($\Delta T_{meas}$) between successive measuring time instants and/or the distance ($\Delta T_{trans}$) between successive transmission time instants is adjustable and is derived from the sensed tire pressure measured values, comprising:

sensing a plurality of tire pressure measured values; **characterized by**

ascertaining an instantaneous pressure dynamics state in the tire occurring as result of the instantaneous driving situation of the vehicle from the plurality of tire pressure measured values, comprising the following substeps:

evaluating (100) a plurality of successive tire pressure measured values to obtain a tire pressure dependent driving situation parameter (P1);

comparing (104) the tire pressure dependent driving situation parameter with a comparison parameter (PV1; PV2); and

ascertaining the instantaneous pressure dynamics state from the comparison;

adjusting the measuring time instants ($T_{meas}$) or the transmission time instants ($T_{trans}$) corresponding to the ascertained instantaneous pressure dynamics state.

2. The method of claim 1, wherein the different pressure dynamics states are categorized into different classes.

3. The method of claim 2, wherein the transitions between the different classes of the pressure dynamics states are derived from the ascertained tire pressure measured values.

4. The method of any of the previous claims, wherein the frequency of occurrence of the transmission is adjusted depending on the ascertained pressure dynamics states by adjusting different time intervals ($\Delta T_{meas}$) between the transmissions.

5. The method of any of the previous claims, wherein the temporal distance ($\Delta T_{meas}$) between successive detection time instants of the tire pressure measured values is adjusted depending on the different pressure dynamics states.

6. The method of claim 5, wherein the temporal distance ($\Delta T_{meas}$) between successive detection time instants is smaller than or equal to the time interval during which a transition between different pressure dynamics states is to be recognized.

7. The method of any of claims 1 to 4, wherein the detection of the tire pressure measured values takes place in fixed temporal distances.

8. The method of any of the previous claims, wherein the parameter derived from the sensed tire pressure measured values is obtained by high-pass or band-pass filtering of the tire pressure measured values.

9. The method of claim 8, wherein the high-pass or bandpass filtered value is squared to obtain the parameter derived from the sensed tire pressure measured values.

10. The method of claim 8, wherein the magnitude of the high-pass or band-pass filtered value is formed to obtain the parameter derived from the sensed tire pressure measured values.

11. The method of any of the previous claims, wherein the pressure dynamics states in the vehicle tire are subdivisible into a plurality of classes of pressure dynamics states, wherein depending on the class the temporal distance ($\Delta T_{trans}$) between successive transmission time instants of the tire pressure measured values is changed.

12. The method of claim 11, wherein the temporal distance ($\Delta T_{trans}$) between successive transmission time instants is smaller than or equal to the time interval during which a transition between different classes of the pressure dynamics states is to be recognized.

13. The method of claim 11 or 12, further comprising:

evaluating (100) a plurality of successive tire pressure measured values to obtain a tire pressure dependent driving situation parameter (P1);

comparing (104) the tire pressure dependent driving situation parameter with a first comparison parameter (PV1) and a second comparison parameter (PV2); and

adjusting (106; 110) the temporal distance ($\Delta T_{trans1}$) between successive transmission time instants of the tire pressure measured values for a first class of the pressure dynamics states when an exceeding of the first comparison parameter (PV1) occurs; and

adjusting (108) the temporal distance ($\Delta T_{trans2}$) between successive transmission time instants of the tire pressure measured values for a second class of the pressure dynamics states when an underrun of the second comparison parameter (PV2) occurs.

14. The method of claim 13, wherein the first and second comparison parameters (PV1, PV2) are ascertained from a plurality of past tire pressure measured values.

15. The method of claim 13 or 14, wherein the first and second comparison parameters (PV1, PV2) coincide.

16. The method of any of claims 13 to 15, wherein the first class of the pressure dynamics states represents a driving state of the vehicle and the second class of the pressure dynamics states a non-operated state of the vehicle.

17. A computer program with a program code for performing, when the computer program is executed on a computer, the method of monitoring the tire pressure in a vehicle tire of any of the previous claims.

**18.** An apparatus for monitoring tire pressure in a tire of a vehicle, wherein tire pressure measured values are detectable by a pressure measuring means at successive measuring time instants ($T_{MEAS}$), and the tire pressure measured values are transmittable from a transmitting unit to a receiving unit at successive transmission time instants ($T_{TRANS}$), wherein the distance ($\Delta T_{meas}$) between successive measuring time instants and/or the distance ($\Delta T_{trans}$) between successive transmission time instants is adjustable and is derived from the sensed tire pressure measured values, comprising:

tire pressure measuring means for sensing a plurality of tire pressure measured values;

a transmitting unit for transmitting the tire pressure measured values to a receiving unit; **characterized by** control means for ascertaining an instantaneous pressure dynamics state in the tire occurring as result of the instantaneous driving situation from the plurality of tire pressure measured values, comprising the following features:

means for evaluating (100) a plurality of successive tire pressure measured values to obtain a tire pressure dependent driving situation parameter (P1);

means for comparing (104) the tire pressure dependent driving situation parameter with a comparison parameter (PV1; PV2); and

means for ascertaining the instantaneous pressure dynamics state from the comparison;

means for adjusting the measuring time instants or the transmission time instants corresponding to the ascertained instantaneous pressure dynamics state.

**Revendications**

**1.** Procédé de contrôle de la pression d'un pneumatique d'un véhicule automobile, dans lequel on relève des valeurs de mesure de la pression du pneumatique à des instants ($T_{MESS}$) de mesure successifs par un dispositif de mesure de la pression et on transmet par une unité d'émission les valeurs de mesure de la pression du pneumatique à des instants ($T_{SENDE}$) de transmission successifs à une unité de réception, la distance ($\Delta T_{mess}$) entre des instants de mesure successifs et/ou la distance ($\Delta T_{sende}$) entre des instants de transmission successifs pouvant être réglée et déduite des valeurs de mesure de la pression du pneumatique qui sont relevées, comprenant les stades suivants :

relevé d'une multiplicité de valeurs de la pression du pneumatique ; **caractérisé en ce que** l'on détermine un état dynamique instantané de la pression dans le pneumatique, qui se produit à la suite de la situation instantanée de roulement du véhicule à partir de la multiplicité de valeurs de mesure de la pression du pneumatique, comportant les sous-stades suivants :

on exploite (100) une multiplicité de valeurs de mesure de la pression du pneumatique successives pour obtenir un paramètre (P1) de situation de roulement en fonction de la pression du pneumatique ;
on compare (104) le paramètre de situation de roulement en fonction de la pression du pneumatique à un paramètre (PV1 ; PV2) de comparaison ; et
on déterminer l'état dynamique instantané de la pression à partir de la comparaison ;

on règle les instants ($T_{mess}$) de mesure ou les instants ($T_{sende}$) de transmission en fonction de l'état dynamique instantané de la pression qui est déterminé.

**2.** Procédé suivant la revendication 1, dans lequel on répartit des états dynamiques de pression différents en classes différentes.

**3.** Procédé suivant la revendication 2, dans lequel on déduit des valeurs de mesure de la pression du pneumatique qui sont déterminées les passages entre les classes différentes des états dynamiques de pression.

**4.** Procédé suivant l'une des revendications précédentes, dans lequel on règle la fréquence de la transmission en fonction des états dynamiques de la pression qui sont déterminés en réglant des intervalles ($\Delta T_{sende}$) de temps différents entre les transmissions.

**5.** Procédé suivant l'une des revendications précédentes, dans lequel on règle l'intervalle ($\Delta T_{mess}$) de temps entre des instants de relevé successifs des valeurs de mesure de la pression du pneumatique en fonction des états dynamiques de pression différents.

**6.** Procédé suivant la revendication 5, dans lequel l'intervalle ($\Delta T_{mess}$) de temps entre des points de relevé successifs est inférieur ou égal à l'intervalle de temps pendant lequel un passage entre des états dynamiques de pression différents doit être détecté.

7. Procédé suivant l'une des revendications 1 à 4, dans lequel on effectue le relevé des valeurs de mesure de la pression du pneumatique à des intervalles de temps fixes.

8. Procédé suivant l'une des revendications précédentes, dans lequel on obtient le paramètre déduit des valeurs de mesure de la pression du pneumatique qui ont été relevées par un filtrage passe-haut ou par un filtrage passe-bande des valeurs de mesure de la pression du pneumatique.

9. Procédé suivant la revendication 8, dans lequel on élève au carré la valeur filtrée passe-haut ou filtrée passe-bande pour obtenir le paramètre déduit des valeurs de mesure de la pression du pneumatique qui ont été relevées.

10. Procédé suivant la revendication 8, dans lequel on forme la valeur absolue de la valeur filtrée passe-haut ou de la valeur filtrée passe-bande pour obtenir le paramètre déduit des valeurs de mesure de la pression du pneumatique qui ont été relevées.

11. Procédé suivant l'une des revendications précédentes, dans lequel on peut subdiviser les états dynamiques de la pression dans le pneumatique du véhicule en une multiplicité de classes d'état dynamique de la pression, l'intervalle ($\Delta T_{sende}$) de temps entre des instants de transmission successifs des valeurs de mesure de la pression du pneumatique étant modifié en fonction de la classe.

12. Procédé suivant la revendication 11, dans lequel l'intervalle ($\Delta T_{sende}$) de temps entre des instants de transmission successifs est inférieur ou égal à l'intervalle de temps pendant lequel on peut détecter un passage entre des classes différentes des états dynamiques de la pression.

13. Procédé suivant la revendication 11 ou 12 qui comporte, en outre, les stades suivants :

on exploite (100) une multiplicité de valeurs de mesure de la pression du pneumatique successives pour obtenir un paramètre (P1) de situation de roulement en fonction de la pression du pneumatique ;
on compare (104) le paramètre de situation de roulement en fonction de la pression du pneumatique à un premier paramètre (PV1) de comparaison et à un deuxième paramètre (PV2) de comparaison ; et
on règle (106 ; 110) l'intervalle ($\Delta T_{sende1}$) de temps entre des instants de transmission successifs des valeurs de mesure de la pression du pneumatique pour une première classe des états dynamiques de la pression lorsque se produit un dépassement du premier paramètre (PV1) de comparaison ; et
on règle (108) l'intervalle ($\Delta T_{sende2}$) de temps entre des instants de transmission successifs des valeurs de mesure de la pression du pneumatique pour une deuxième classe d'états dynamiques de la pression lorsque l'on passe en dessous du deuxième paramètre (PV2) de comparaison.

14. Procédé suivant la revendication 13, dans lequel on détermine le premier et le deuxième paramètre (PV1, PV2) de comparaison à partir d'une multiplicité de valeurs de mesure de la pression de pneumatique antérieures.

15. Procédé suivant la revendication 13 ou 14, dans lequel le premier et le deuxième paramètre (PV1, PV2) de comparaison coïncident.

16. Procédé suivant l'une des revendications 13 à 15, dans lequel la première classe des états dynamiques de la pression représente un état de roulement du véhicule et la deuxième classe des états dynamiques de la pression représente un état de repos du véhicule.

17. Programme d'ordinateur ayant un code de programme pour effectuer le procédé de contrôle de la pression d'un pneumatique d'un véhicule automobile suivant l'une des revendications précédentes lorsque le programme d'ordinateur se déroule sur un ordinateur.

18. Dispositif de contrôle de la pression d'un pneumatique d'un véhicule automobile, dans lequel les valeurs de mesure de la pression du pneumatique peuvent être relevées à des instants ($T_{MESS}$) de mesure successifs par un dispositif de mesure de la pression et par une unité d'émission, les valeurs de mesure de la pression du pneumatique peuvent être transmises à des instants ($T_{SENDE}$) de transmission successifs à une unité de réception, la distance ($\Delta T_{mess}$) entre des instants de mesure successifs et/ou la distance ($\Delta T_{sende}$) entre des instants de transmission successifs pouvant être réglée et pouvant être déduite des valeurs de mesure de la pression du pneumatique qui ont été relevées, comprenant les caractéristiques suivantes :

un dispositif de mesure de la pression du pneumatique pour relever une multiplicité de valeurs de mesure de la pression du pneumatique ;
une unité d'émission pour transmettre les valeurs de mesure de la pression du pneumatique à une unité de réception ; **caractérisé par** un dispositif de commande pour déterminer un état dynamique instantané de la pression dans le pneumatique qui se produit en raison de la situation instantanée de roulement à partir de la multiplicité des valeurs de mesure de la pression du pneumatique qui a, en outre les caractéristiques suivantes :

> un dispositif d'exploitation (100) d'une multiplicité de valeurs de mesure de la pression du pneumatique successives pour obtenir un paramètre (P1) de situation de roulement en fonction de la pression du pneumatique ;
> un dispositif de comparaison (104) du paramètre de situation de roulement en fonction de la pression du pneumatique à un paramètre (PV1 ; PV2) de comparaison ; et
> un dispositif de détermination de l'état dynamique instantané de la pression à partir de la comparaison ;

un dispositif de réglage des instants de mesure ou des instants d'émission en fonction de l'état dynamique instantané de la pression qui est déterminée.

FIG 1

54 — ZEITGEBER INKREMENTIEREN

56 — ANSCHALT-ZEITPUNKT

62 — SPI-AKTIVIERUNG

60 — ANALOGEN UND DIGITALEN SCHALTUNGSBEREICH AKTIVIEREN

52 — DIGITALEN SCHALTUNGSBEREICH ABSCHALTEN

50 — ZEITGEBER ZURÜCKSETZEN

10

12 — DRUCKWERT MESSEN

24 — SCHWELLENWERT-ZÄHLER DEKREMENTIEREN

26 — IIR FILTER D, T, BSP -> ΦD, ΦT, ΦBSP

28 — DIFFERENZ Δ ZWISCHEN MESSWERT UND VORHERGEHENDEM MESSWERT BERECHNEN

23

30 — AKTUELLEN MESS-WERT SPEICHERN

32 — IIR FILTER Δ^2->ΦΔ^2

34 — ZÄHLWERT=0

36 — (2^n1)*ΦΔ^2 UNTERHALB ZÄHLWERT

38 — Δ^2 UNTERHALB (2^n2)*ΦΔ^2

14 — TEMPERATUR

16 — BATTERIE

18 — TEMPERATUR MESSEN

20 — BATTERIESPAN-NUNG MESSEN

22 — ANALOGEN SCHAL-TUNGSBEREICH ABSCHALTEN

43A — KOMPENSIERTE T BERECHNEN

43B — T-KOMPENSIERTE DRUCKKOEFFIZIENTEN BERECHNEN

43

43C — KOMPENSIERTE DRUCKMESSWERTE BERECHNEN

OPTIONAL

40

42 — AKTIVIERUNG EINES µC ODER DER SENDEEINHEIT

44 — SPI AKTIV

46 — ABSCHALTUNG VON EINER HAUPTEINHEIT

48 — ZÄHLER ZURÜCKSETZEN

FIG 2A

FIG 2B

FIG 2C

**FIG 3A**

**FIG 3B**

**FIG 4A**

SCHNELLE DRUCKÄNDERUNG

REIFENDRUCK

**FIG 4B**

REIFENDRUCK-MESSWERTE

**FIG 4C**

ÜBERMITTELTE REIFENDRUCK-MESSWERTE

$\Delta T_{MAX}$

$\Delta T_{MIN}$

**FIG 5A**

DRUCKVERLAUF IM REIFEN

I DRUCKMESSWERTE
II KURZZEITMITTELWERT

**FIG 5B**

PRESAURE VARIATION [FRONT WHEEL]

DIFFERENCE III

**FIG 5C**

IV ABWEICHUNGSQUADRATE
V ABWEICHUNGSQUADRATE GEFILTERT
VI ZUSTAND

FAHREN

RUHE

$t_a$ $t_b$

FIG 6

102 BESTIMMUNG VON P1

108 $\Delta T$SENDE 1 ($\Delta T$MESS 1)

106 $\Delta T$SENDE 2 ($\Delta T$MESS 2)

111 $\Delta T$SENDE 3 ($\Delta T$MESS 3)

112 $\Delta T$SENDE 4 ($\Delta T$MESS 4)

. . .

104 DRUCKDYNAMIKZUSTAND

NIEDRIG     HOCH

EP 1 516 753 B1

# FIG 7

60

62                     64

| SENSOR-
EINHEIT | → | SENDE-
EINHEIT |

66

STEUER-
EINHEIT